# EUROPÄISCHE PATENTSCHRIFT

(11) **EP 3 540 149 B1**
(45) Veröffentlichungstag und Bekanntmachung des Hinweises auf die Patenterteilung: **09.03.2022**
(21) Anmeldenummer: 18162041.0
(22) Anmeldetag: 15.03.2018
(51) Int. Cl.: E04G 23/08, G06Q 10/06, G06Q 10/08, G06Q 50/08, B09B 3/00

(54) **SYSTEM ZUR BEHANDLUNG VON BAUWERKSCHADSTOFFEN**
SYSTEM FOR TREATMENT OF STRUCTURE POLLUTANTS
SYSTÈME DE TRAITEMENT DE POLLUANTS DE BÂTIMENTS

(43) Veröffentlichungstag der Anmeldung: 18.09.2019
(73) Patentinhaber: HPC AG, 65830 Kriftel (DE)
(72) Erfinder: METZNER, Ines, Dr., 08568 Reichenbach im Vogtland (DE); SCHUBERT, Maro, 63069 Offenbach am Main (DE)
(74) Vertreter: Isarpatent

(56) Entgegenhaltungen:
- JP-A- 2009 210 403
- HISER: "BIM for demolition", , 27. Januar 2016 (2016-01-27), XP002783926, Gefunden im Internet: URL:http://hiserproject.eu/index.php/pozyc ja-1/80-news/119-bim-for-demolition [gefunden am 2018-08-16]
- García, David; Plazaola, Xavier; Vegas, Iñigo; Areizaga, Pedro: "BIM for pre-demolition and refurbishment inventories and waste information management", , 21. Juni 2017 (2017-06-21), XP002783930, Gefunden im Internet: URL:https://repository.tudelft.nl/islandor a/object/uuid%3Ad6147bdf-2531-4ea1-a828-db 3e56e98b64 [gefunden am 2018-08-16]

## Beschreibung

Die Erfindung betrifft ein Verfahren und ein System zur Behandlung von Bauwerkschadstoffen, insbesondere von Gebäudeschadstoffen. Diese Bauwerkschadstoffe können umweltgefährdende und/oder gesundheitsgefährdende Stoffe umfassen, die an Bauelementen des Bauwerkes vorhanden sind und bei Herstellung des Bauwerkes und/oder bei Betrieb bzw. Nutzung des Bauwerkes entstehen können.

Bauwerke, beispielsweise Gebäude, können aus einer Vielzahl von Bauteilen bzw. Bauelementen bestehen. Bestehende Gebäude bzw. Bauwerke enthalten in vielen Fällen Bauwerkschadstoffe, die gesundheitsgefährdend oder umweltgefährdend sein können. In diesen Fällen ist es notwendig, die Bauwerkschadstoffe des Gebäudes im Zuge einer Sanierung zu ersetzen und die Bauwerkschadstoffe bzw. Gebäudeschadstoffe zu entsorgen oder das Vorhandensein dieser Schadstoffe dokumentiert, falls diese im Gebäude verbleiben sollen und eine Gefahr für Gebäudenutzer oder für Arbeiter darstellen, wenn diese Schadstoffe durch Arbeiten dieser freigesetzt werden. Soweit Bauwerke bzw. Gebäude neu errichtet werden, soll soweit möglich bereits bei der Planung die Verwendung von Bauwerkschadstoffen vermieden werden. Die Anforderungen hinsichtlich der verwendeten Bauwerkstoffe ändern sich aufgrund des zunehmenden Wissens über ihre Auswirkungen auf die Gesundheit und/oder die Umwelt jedoch fortlaufend, sodass die Behandlung von Bauwerkschadstoffen sowohl bei der Planung eines neuen Bauwerkes als auch bei der Sanierung eines bestehenden Bauwerkes ein komplexer Vorgang ist. Herkömmlicherweise erfolgt die Ermittlung von Gebäudeschäden bzw. Bauwerkschäden aufgrund von vorhandenen Schadstoffen durch einen Gutachter, welcher das Bauwerk bzw. das Gebäude besichtigt und aufgrund seiner Erfahrung als Gutachter auftretende Gebäudeschäden auffindet und bewertet. Typischerweise wird durch den Gutachter ein Gutachten hinsichtlich der aufgetretenen Gebäudeschäden, insbesondere hinsichtlich möglicher Gebäudeschadstoffe, erstellt und von ihm eine Empfehlung hinsichtlich der Behandlung der erfassten Gebäudeschäden gegeben. Demzufolge schwankt die Qualität des erstellten Gutachtens stark in Abhängigkeit von der Erfahrung des beauftragten Gutachters. In vielen Fällen werden auch vorhandene Bauwerkschadstoffe überhaupt nicht erkannt oder hinsichtlich ihrer Auswirkungen auf die Gesundheit und Umwelt fehlerhaft bewertet. Die Erfassung der Gebäudeschäden und/oder Bauwerkschadstoffe erfolgt durch den Gutachter herkömmlicherweise rein manuell, wobei beispielsweise ein Schadstoffverzeichnis-Geländeprotokoll durch den Gutachter oder eine sonstige Person ausgefüllt wird, welches als Grundlage für ein Gutachten dient. Beispielsweise kann ein Gutachter in dem Schadstoffverzeichnis-Geländeprotokoll bei einem Bauelement des Gebäudes einen Schadstoffverdacht ankreuzen, beispielsweise hinsichtlich Asbest. Darüber hinaus kann der Gutachter weitere Notizen hinsichtlich Beobachtungen des Gebäudeschadens in dem Schadstoffverzeichnis-Geländeprotokoll handschriftlich machen. Das Ausfüllen des Schadstoffverzeichnis-Geländeprotokolls beruht allein auf der Erfahrung des Gutachters oder der mit der Datenaufnahme beauftragten Person. Typischerweise macht herkömmlicherweise die mit der Schadensaufnahme beauftragte Person auch Fotos von dem aufgefundenen Gebäudeschaden, die bei der Ausarbeitung des Gutachtens mitberücksichtigt werden. Bei einem komplexen Gebäude mit einer Vielzahl von Räumen und einer Vielzahl von möglichen zum Teil auch heterogenen Gebäudeschäden sind eine Vielzahl von Schadstoffverzeichnis-Geländeprotokollen auszufüllen. Hierdurch wird der Aufnahmeprozess zur Aufnahme der Gebäudeschäden äußerst mühevoll und fehleranfällig und kann eine relativ lange Zeitdauer in Anspruch nehmen. Darüber hinaus sind die aufgenommenen Daten hinsichtlich der Gebäudeschadstoffe bzw. Bauwerkschadstoffe hinsichtlich des betroffenen Gebäudes unübersichtlich und nicht strukturiert bzw. miteinander logisch verknüpft. Demzufolge ist die Erstellung eines entsprechenden Gutachtens anspruchsvoll und kann aufgrund der unübersichtlichen Beschreibung der aufgenommenen Gebäudeschäden zu einer suboptimalen Empfehlung hinsichtlich der Behandlung der Gebäude- bzw. Bauwerkschäden, insbesondere hinsichtlich der Behandlung von Bauwerkschadstoffen bzw. Gebäudeschadstoffen führen. Diese Situation wird zusätzlich dadurch erschwert, dass sich Einstufungen von verschiedenen bei der Erstellung eines Gebäudes verwendeten Baustoffen hinsichtlich ihrer Umweltgefährdung oder Gesundheitsgefährdung über die Zeit verändern können. Beispielsweise ist es möglich, dass ein verwendeter Dämmstoff bis zu einem gewissen Datum noch als Baustoff zulässig war und anschließend aufgrund neuer Erkenntnisse nicht länger als Baustoff verwendet werden darf und somit einen Bauwerkschadstoff darstellt. In vielen Fällen ist diejenige Person, welche mit der Aufnahme eines Gebäudeschadens bzw. Bauwerkschadens beauftragt ist, überfordert, da sie nicht alle in Frage kommenden Bauwerkschadstoffe kennt bzw. deren Vorhandensein in dem betroffenen Bauwerk nicht erkennt. Selbst erfahrene Gutachter können zu Fehleinschätzungen kommen, falls beispielsweise ein bisher erlaubter Bauwerkstoff als Bauwerkschadstoff umqualifiziert wird. In jedem Fall ist der Aufwand bei der herkömmlichen Vorgehensweise zur Behandlung von Bauwerkschadstoffen äußerst aufwendig und fehleranfällig.

In JP 2009 210403 A wird eine "Bauwerk-Abriss-Verwaltung", die einen "Abriss-Arbeitsplan" erstellt, offenbart.

In "BIM for demolition" wird BIM für Abrissarbeiten offenbart. Es wird eine einfache Schnittstelle offenbart, um vor Ort eine Bestandsaufnahme durchzuführen. Ferner wird ein "kluges Analysemodul" offenbart, das alle benötigten Informationen aus dem BIM extrahiert, um die geeignetste Alternative zum Verwalten der Materialien zu ermitteln, basierend auf Entfernungen von Recycling-Fabriken, Gebühren für die Entsorgung usw.

Garcia et al offenbaren in "BIM for pre-demolition and refurbishment inventories and waste information management" Softwarewerkzeug, "BIM-SD", zur Unterstützung eines Benutzers beim Pre-Demontage-Audit. Ein tragbarer Editor unterstützt den Pre-Demontage-Bestandsaufnahme-Prozess, wobei ein Benutzer die Produkte, Konstruktionssysteme und Materialien identifiziert, die in dem Gebäude vorhanden sind, wobei er eine mit dem Werkzeug verbundene Datenbank nutzt. Für die Erzeugung eines Abfall-Audits unterstützt der "Smart BIM-SD Analyser" die "Schreibtischforschung" der tatsächlichen Abfallströme basierend auf dem Demontage-, Entfernungs- und Abriss-Prozess. Entsprechende Wiederverwendungs-, Recycling-, Energierückgewinnungs- oder Abfallbeseitigungs-Optionen und Transport zum Endlager können ermittelt werden.

Es ist daher eine Aufgabe der vorliegenden Erfindung, ein Verfahren und ein System zur Behandlung von Bauwerkschadstoffen zu schaffen, welche die oben genannten Nachteile vermei det und insbesondere die Effizienz bei der Behandlung von Bauwerkschadstoffen deutlich erhöht.

Diese Aufgabe wird erfindungsgemäß durch ein System zur Behandlung von Bauwerkschadstoffen mit den in Patentanspruch 1 angegebenen Merkmalen gelöst.

Die Erfindung schafft demnach ein System zur Behandlung von Bauwerkschadstoffen, umfassend einen Rechner, insbesondere Server, auf dem eine Auswerteeinheit implementiert ist, eine zentrale Datenbank, auf die die Auswerteeinheit zugriff hat, und ein mobiles tragbares Feldgerät, das eine Datenschnittstelle zu der Auswerteeinheit und zu der Datenbank aufweist. Das System ist ausgebildet, fundortbezogene Schadstoffdaten von Bauwerkschadstoffen an Schadstofffundorten mindestens eines betroffenen Bauwerkes lokal zu erfassen, und die Auswerteeinheit ist ausgebildet, die erfassten fundortbezogenen Schadstoffdaten auf Grundlage eines in der zentralen Datenbank gespeicherten Bauwerkplanes des betroffenen Bauwerkes auszuwerten und Anweisungen und/oder Steuersignale zur Behandlung von Bauwerkschadstoffen und/oder zur Verwaltung von Schadstoffdaten zu generieren. Das Feldgerät ist ausgebildet, die fundortbezogenen Schadstoffdaten von Bauwerkschadstoffen an Schadstofffundorten vor Ort zu erfassen und über die Datenschnittstelle die fundortbezogenen Schadstoffdaten an die Auswerteeinheit und/oder die zentrale Datenbank zu übertragen. Das tragbare Feldgerät weist eine Datenverarbeitungseinheit auf, die zur Vor-Ort-Messung und/oder Vor-Ort-Analyse biologischer, chemischer und/oder physikalischer Eigenschaften eines in oder an dem Bauwerk vorhandenen Bauwerkschadstoffes ausgebildet ist, die als Materialeigenschaftsdaten über die Datenschnittstelle des tragbaren Feldgerätes an die auf dem Rechner implementierte Auswerteeinheit des Systems und/oder die eine zentrale Datenbank des Systems übertragbar sind.

Bei den betroffenen Bauwerken kann es sich um beliebige Bauwerke handeln, insbesondere Gebäude. Bei einer möglichen Ausführungsform ist die Auswerteeinheit auf einem Serverrechner implementiert.

Bei einer weiteren möglichen Ausführungsform des erfindungsgemäßen Systems ist die auf dem Rechner implementierte Auswerteeinheit des Systems ausgebildet, Anweisungen und/oder Steuersignale zum Umgang, zur Behandlung, zur Entsorgung und/oder zum Recycling von gesundheitsgefährdenden und/oder umweltgefährdenden Bauwerkschadstoffen in Abhängigkeit der erfassten fundortbezogenen Schadstoffdaten und des gespeicherten Bauwerkplanes des betroffenen Bauwerkes zu generieren und über eine Steuerschnittstelle und/oder eine IFC-Datenschnittstelle auszugeben.

Bei einer möglichen Ausführungsform gibt die Auswerteeinheit die generierten Anweisungen und/oder generierten Steuersignale über eine Steuerschnittstelle und/oder über eine IFC-Datenschnittstelle aus.

Bei einer weiteren möglichen Ausführungsform des erfindungsgemäßen Systems ist das Feldgerät ausgebildet, die fundortbezogenen Schadstoffdaten mit Fundortdaten zu erfassen, die den Schadstofffundort eines detektierten Bauwerkschadstoffes, insbesondere eines Gebäudeschadstoffes, innerhalb des Gebäudes oder an dem Gebäude angeben.

Diese Fundortdaten umfassen bei einer möglichen Ausführungsform des erfindungsgemäßen Systems einen Bauwerkeidentifizierer des betroffenen Bauwerkes, einen Identifizierer der erfassenden Person, insbesondere des erfassenden Gutachters, welcher die fundortbezogenen Schadstoffdaten erfasst, eine Stockwerknummer eines Stockwerkes innerhalb des Bauwerkes bzw. Gebäudes, und/oder eine Raumnummer eines Bauwerkraumes innerhalb des Bauwerkes und/oder Positionskoordinaten des Schadstofffundortes.

Bei einer weiteren möglichen Ausführungsform des erfindungsgemäßen Systems ist das Feldgerät ausgebildet, die fundortbezogenen Schadstoffdaten mit Materialdaten hinsichtlich biologischer, chemischer und/oder physikalischer Eigenschaften des detektierten Bauwerkschadstoffes,
mittels Sensoren erfasste Messdaten hinsichtlich des detektierten Bauwerkschadstoffes,
Kamerabilddaten des an dem Schadstofffundort detektierten Bauwerkschadstoffes,
eine maschinenlesbare Beschreibung des aufgetretenen Bauwerkschadens und/oder Bauwerkschadstoffes,
mittels einer Positionierungseinheit erfasste Positionskoordinaten des Schadstofffundortes,
eine mittels eines Höhensensors ermittelte Höhe oder Stockwerknummer des Schadstofffundortes,
eine mittels eines Mikrofons eingegebene Audioaufzeichnung zur Beschreibung des aufgetretenen Bauwerkschadens und/oder Bauwerkschadstoffes sowie
Zeitdaten, welche einen Zeitpunkt der Erfassung der fundortbezogenen Schadstoffdaten angeben, zu erfassen.

Bei einer weiteren möglichen Ausführungsform des erfindungsgemäßen Systems weist das tragbare Feldgerät eine integrierte oder daran anschließbare Materialentnahmeeinheit zur Entnahme einer Materialprobe eines potentiellen Bauwerkschadstoffes an dem Schadstofffundort auf.

Bei einer weiteren möglichen Ausführungsform des erfindungsgemäßen Systems ist das tragbare Feldgerät ausgebildet, die von der Materialanalyseeinheit des Feldgerätes ermittelten Materialeigenschaftsdaten eines an dem Schadstofffundort vorhandenen potentiell gesundheitsgefährdenden und/oder umweltgefährdenden Bauwerkschadstoffes an die auf dem Rechner implementierte Auswerteeinheit des Systems zu übertragen.

Bei einer weiteren möglichen Ausführungsform des erfindungsgemäßen Systems ist die auf dem Rechner implementierte Auswerteeinheit ausgebildet, die von dem tragbaren Feldgerät empfangenen Materialeigenschaftsdaten auf Grundlage von in der Datenbank des Systems gespeicherten Schadstoffdaten einer Vielzahl von bekannten Bauwerkschadstoffen zur Erkennung einer Art des an dem Schadstofffundort vorhandenen Bauwerkschadstoffes sowie zur Erkennung eines Ausmaßes der von dem Bauwerkschadstoff ausgehenden Gefährdung auszuwerten.

Bei einer weiteren möglichen Ausführungsform des erfindungsgemäßen Systems ist das Feldgerät ausgebildet, die durch das tragbare Feldgerät lokal erfassten fundortbezogenen Schadstoffdaten über die Datenschnittstelle des Feldgerätes und ein Datennetzwerk an die zentrale Datenbank des Systems zu übertragen, auf welche der Rechner des Systems mit der darin implementierten Auswerteeinheit Zugriff hat.

Bei einer weiteren möglichen Ausführungsform des erfindungsgemäßen Systems ist die zentrale Datenbank des Systems ausgebildet, Bauwerkpläne einer Vielzahl von Bauwerken unterschiedlicher Bauwerkebetreiber und eine Vielzahl von Schadstoffdaten von Bauwerkschadstoffen zu speichern.

Bei einer weiteren möglichen Ausführungsform des erfindungsgemäßen Systems sind Endgeräte verschiedener Bauwerkebetreiber über ein Datennetzwerk mit einem Managementserver des Systems zum Hochladen und/oder Anpassen von Bauwerkplänen und/oder Bauwerkdaten, insbesondere Baustoffdaten von Bauelementen des Bauwerkes, verbunden, welche innerhalb der zentralen Datenbank des Systems gespeichert werden.

Bei einer weiteren möglichen Ausführungsform des erfindungsgemäßen Systems sind die fundortbezogenen Schadstoffdaten von Bauwerkschadstoffen, die innerhalb eines Bauwerkes bzw. Gebäudes eines Bauwerkebetreibers detektiert werden, an Endgeräten des betreffenden Bauwerkebetreibers gefiltert anzeigbar.

Bei einer weiteren möglichen Ausführungsform des erfindungsgemäßen Systems ist das mobile tragbare Feldgerät ein Eingabetablet.

Bei einer weiteren möglichen Ausführungsform des erfindungsgemäßen Systems ist das mobile tragbare Feldgerät ein Augmented Reality-Eingabegerät.

Bei einer weiteren möglichen Ausführungsform des erfindungsgemäßen Systems ist die auf dem Rechner implementierte Auswerteeinheit des Systems ausgebildet, anhand der fundortbezogenen Schadstoffdaten einen Abtransport der Bauwerkschadstoffe aus dem betroffenen Gebäude bzw. Bauwerk zu einem Behandlungsort, einem Entsorgungsort und/oder zu einem Recyclingort und/oder eine physikalische, chemische und/oder biologische Behandlung der Bauwerkschadstoffe an dem Behandlungsort, Entsorgungsort oder Recyclingort in Abhängigkeit der generierten Anweisungen und/oder generierten Steuersignale zu steuern.

Bei einer weiteren möglichen Ausführungsform des erfindungsgemäßen Systems ist die auf dem Rechner implementierte Auswerteeinheit des Systems ausgebildet, den Abtransport der Bauwerkschadstoffe aus dem betroffenen Bauwerk auf Grundlage des gespeicherten Bauwerkplanes des betreffenden Bauwerkes, eines gespeicherten Umgebungsplanes des Bauwerkes und lokal vorhandener Transportressourcen, insbesondere Transportfahrzeugen, zu einem geeigneten Behandlungsort, Entsorgungsort oder Recyclingort in der Nähe des betreffenden Bauwerkes logistisch zu steuern.

Bei einer möglichen Ausführungsform des erfindungsgemäßen Systems weisen die durch das System behandelten Bauwerkschadstoffe umweltgefährdende und/oder gesundheitsgefährdende feste, flüssige oder gasförmige Stoffe auf, die in oder an Bauelementen des Bauwerkes vorhanden sind und bei deren Herstellung und/oder bei der Nutzung oder Demontage des Bauwerkes entstehen oder in die Umwelt freigesetzt werden können.

Bei einer weiteren möglichen Ausführungsform des erfindungsgemäßen Systems weist die auf dem Rechner implementierte Auswerteeinheit ein maschinenlernbares artifizielles neuronales Netzwerk auf, das mit fundortbezogenen Schadstoffdaten zur Erkennung von Schadensmustern trainierbar ist.

Bei einer weiteren möglichen Ausführungsform des erfindungsgemäßen Systems weist das Feldgerät eine Berechnungseinheit auf, die ausgebildet ist, für die erfassten fundortbezogenen Schadstoffdaten und/oder Probenbegleitdaten ein Zertifikat zu berechnen, welches die Erfassung der fundortbezogenen Schadstoffdaten und/oder die Entnahme einer Materialprobe an dem Schadstofffundort innerhalb des Bauwerkes durch das tragbare Feldgerät zertifiziert.

Bei einer weiteren möglichen Ausführungsform des erfindungsgemäßen Systems ist das Feldgerät ausgebildet, das berechnete Zertifikat zusammen mit den Schadstoffdaten und/oder Probenbegleitdaten zu der auf dem Rechner implementierten Auswerteeinheit und/oder zu der Datenbank des Systems und/oder zu einem Analyselabor zu übertragen.

Die Erfindung schafft gemäß einem weiteren Aspekt ein Verfahren zum Bereitstellen von Anweisungen für die Behandlung von Bauwerkschadstoffen mit den in Patentanspruch 14 angegebenen Merkmalen.

Die Erfindung schafft demnach ein Verfahren zum Bereitstellen von Anweisungen für die Behandlung von Bauwerkschadstoffen mit den Schritten:
Erfassen von fundortbezogenen Schadstoffdaten von Bauwerkschadstoffen an Schadstofffundorten betroffener Bauwerke, Übermitteln der erfassten fundortbezogenen Schadstoffdaten zu einer auf einem Rechner implementierten Auswerteeinheit und/oder zu einer Datenbank und Auswerten der übermittelten fundortbezogenen Schadstoffdaten durch die auf dem Rechner implementierte Auswerteeinheit auf Grundlage von in der Datenbank gespeicherten Bauwerkplänen der betroffenen Bauwerke zur automatischen Generierung von Anweisungen und/oder Steuersignalen für die Behandlung von als gesundheitsgefährdend und/oder umweltgefährdend erkannten Bauwerkschadstoffen der betroffenen Bauwerke und/oder zur Verwaltung von Schadstoffdaten.

Bei einer möglichen Ausführungsform des erfindungsgemäßen Verfahrens umfasst das Verfahren die folgenden weiteren Schritte:
Übersenden einer an dem Schadstofffundort (SSFO) durch eine Materialentnahmeeinheit (MEE) des Feldgerätes (FG) lokal entnommene Materialprobe des Bauwerkschadstoffes (BSS) zusammen mit Probenbegleitdaten an eine Analyseeinheit (ANE) eines selektierten Analyselabors (AL),
Vornehmen einer Materialanalyse der empfangenen Materialprobe durch das Analyselabor, und
Übermitteln der dabei ermittelten biologischen, chemischen und physikalischen Eigenschaften der Materialprobe als fundortbezogene Schadstoffdaten (SSD) zusammen mit den Probenbegleitdaten an die auf dem Rechner (R) implementierte Auswerteeinheit (AE) des Systems und/oder an die zentrale Datenbank (DB) des Systems,
wobei Probenbegleitdaten einen Probenidentifizierer, einen Entnahmeort bzw. Fundort der Materialprobe, ein Entnahmedatum der Materialprobe und/oder eine Angabe über die Probenart der Materialprobe aufweisen.

Bei einer weiteren möglichen Ausführungsform des erfindungsgemäßen Verfahrens sind die Bauwerkschadstoffe (BSS) umweltgefährdende und/oder gesundheitsgefährdende feste, flüssige oder gasförmige Stoffe aufweisen, die in oder an Bauelementen des Bauwerkes (B) vorhanden.

Im Weiteren werden mögliche Ausführungsformen des erfindungsgemäßen Systems und des erfindungsgemäßen Verfahrens zur Behandlung von Bauwerkschadstoffen unter Bezugnahme auf die beigefügten Figuren näher erläutert.

Es zeigen:
- Figur 1: eine schematische Darstellung zur Erläuterung einer möglichen Ausführungsform eines erfindungsgemäßen Systems zur Behandlung von Bauwerkschadstoffen;
- Figur 2: eine weitere schematische Darstellung zur Erläuterung eines weiteren Ausführungsbeispiels eines erfindungsgemäßen Systems zur Behandlung von Bauwerkschadstoffen;
- Figur 3: ein schematisches Blockschaltbild zur Darstellung eines Ausführungsbeispiels eines tragbaren Feldgerätes zur Erfassung von fundortbezogenen Schadstoffdaten von Bauwerkschadstoffen gemäß einem weiteren Aspekt der Erfindung;
- Figur 4: ein Ablaufdiagramm eines möglichen Ausführungsbeispiels eines erfindungsgemäßen Verfahrens zum Bereitstellen von Anweisungen für die Behandlung von Bauwerkschadstoffen.

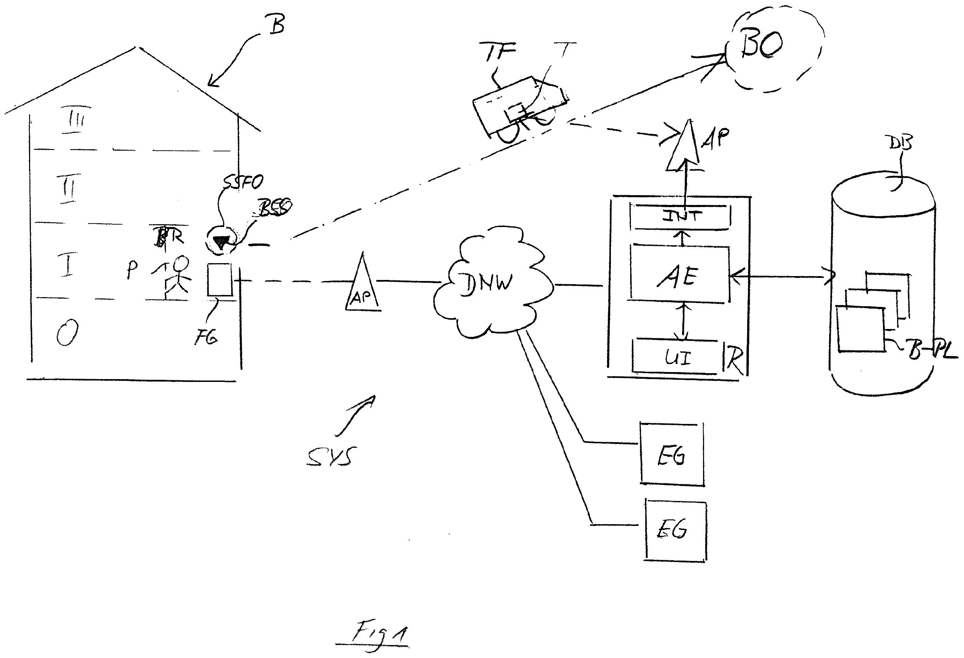

Figur 1 zeigt schematisch ein Ausführungsbeispiel eines erfindungsgemäßen Systems SYS zur Behandlung von Bauwerkschadstoffen BSS. Wie in Figur 1 schematisch dargestellt, befindet sich in einem Bauwerk B, insbesondere einem Gebäude, im Stockwerk I ein Bauwerkraum BR mit einem Schadstofffundort SSFO mit einem Bauwerkschadstoff BSS. Bei dem Bauwerkschadstoff BSS kann es sich um einen Stoff aus einer vorgegebenen Gruppe von Bauwerkschadstoffen BSS handeln, die in einer Datenbank DB des Systems SYS abgespeichert sein können. Der Bauwerkschadstoff BSS ist beispielsweise Asbest, PCB, PAK, PCP, Holzschutzmittel, KMF, Formaldehyd, Flammschutzmittel, Schimmel, VOC, MKW, BTEX oder LHKW. Der Bauwerkschadstoff BSS kann an einem Bauelement oder Bauteil des Bauwerkes B vorhanden sein. Bei dem Bauwerk B, wie es in Figur 1 dargestellt ist, handelt es sich um ein Gebäude mit mehreren Stockwerken 0, I, II, III. Bei dem Bauwerk B kann es sich auch um eine andere Art von Bauwerk handeln, beispielsweise eine Straße, Schallschutzmauer oder Bahndamm. Das Bauwerk B besteht aus einer Vielzahl von Bauelementen bzw. Bauteilen. Die Bauteile umfassen beispielsweise Brandschutzklappen, Trennelemente, Brandschutztüren, Bodenbeläge, Bremsbeläge, Deckenplatten, Dichtungen, Formstücke, Fugenmassen, Holzkonstruktionen, Klebemittel, Lampen, Platten, Wandverputzungen, Spachtelmassen, Stopfmassen, Wellblechplatten oder dergleichen.

Fundortbezogene Schadstoffdaten SSD von Bauwerkschadstoffen BSS an Schadstofffundorten SSFO des betroffenen Bauwerkes B werden vor Ort lokal erfasst und an eine auf einem Rechner R implementierte Auswerteeinheit AE übermittelt. Bei dem in Figur 1 dargestellten Ausführungsbeispiel ist die Auswerteeinheit AE auf einem Serverrechner implementiert, welcher über ein Datennetzwerk DNW mit einem Zugangs- bzw. Access Point AP mit einem tragbaren Feldgerät FG kommuniziert bzw. Daten austauscht. Die Auswerteeinheit AE, die auf dem Rechner R implementiert ist, hat Zugriff auf eine zentrale Datenbank DB des Systems SYS. In der Datenbank DB des Systems SYS befinden sich gespeicherte Bauwerkpläne BPL von verschiedenen Bauwerken bzw. Gebäuden B. Die auf dem Rechner R implementierte Auswerteeinheit AE ist dazu ausgelegt, die erfassten fundortbezogenen Schadstoffdaten SSD, die beispielsweise von dem Feldgerät FG erfasst und an die Auswerteeinheit AE übermittelt werden, auszuwerten und entsprechende Anweisungen und/oder Steuersignale zur Behandlung von Bauwerkschadstoffen BSS zu generieren. Bei einer möglichen Ausführungsform kann die Auswerteeinheit AE zudem Anweisungen für die Verwaltung von Schadstoffdaten SSD generieren. Bei dem in Figur 1 dargestellten Ausführungsbeispiel werden die fundortbezogenen Schadstoffdaten SSD von Bauwerkschadstoffen BSS, die an verschiedenen Schadstofffundorten SSFO innerhalb des Bauwerkes oder an dem Gebäude B vorhanden sind vor Ort mittels des mobilen tragbaren Feldgerätes FG oder eines tragbaren Eingabetablets mit graphischem Nutzerinterface GUI erfasst. Das tragbare Feldgerät FG verfügt über eine Datenschnittstelle DSS zur Übertragung der fundortbezogenen Schadstoffdaten SSD an die auf dem Rechner R implementierte Auswerteeinheit AE des Systems SYS.

Bei dem in Figur 1 dargestellten Ausführungsbeispiel ist die Auswerteeinheit AE auf einem Serverrechner implementiert. Alternativ kann die Auswerteeinheit AE auch auf einem Clientrechner eines Nutzers implementiert sein. Die auf dem Rechner R implementierte Auswerteeinheit AE des Systems SYS enthält einen Prozessor und generiert automatisch Anweisungen und/oder Steuersignale zum Umgang, zur Behandlung, Entsorgung und/oder zum Recycling von gesundheitsgefährdenden und/oder umweltgefährdenden Bauwerkschadstoffen BSS in Abhängigkeit der erfassten und übermittelten fundortbezogenen Schadstoffdaten SSD sowie in Abhängigkeit des gespeicherten Bauwerkplanes BPL des betroffenen Bauwerkes B, der aus der Datenbank DB des Systems SYS ausgelesen wird.

Bei einer möglichen Ausführungsform verfügt die Auswerteeinheit AE bzw. der Rechner R über eine oder mehrere Schnittstellen bzw. Interfaces INT. Bei einer möglichen Ausführungsform verfügt der Rechner R über eine Steuerschnittstelle zur Ausgabe von ermittelten bzw. berechneten Steuersignalen, welche beispielsweise über einen Zugangspunkt bzw. Access Point AP drahtlos ein Transportfahrzeug TF, welches über einen Transceiver T verfügt, ansteuert. Bei einer möglichen Ausführungsform ist der Rechner R in einem Servicefahrzeug integriert, das beispielsweise neben dem Bauwerk geparkt wird. Das Transportfahrzeug TF stellt eine Transportressource zum Abtransport von Bauwerkschadstoffen BSS dar. Beispielsweise kann der erfasste Bauwerkschadstoff bzw. Gebäudeschadstoff BSS mithilfe des Transportfahrzeuges TF an einen Behandlungsort BO überbracht werden, wie in Figur 1 schematisch dargestellt. Die Auswerteeinheit AE steuert in der dargestellten Ausführungsform logistisch den Abtransport des erkannten gesundheitsgefährdenden Bauwerkschadstoffes BSS vom Schadstofffundort SSFO. Die auf dem Rechner R implementierte Auswerteeinheit AE des Systems SYS kann anhand der fundortbezogenen Schadstoffdaten SSD einen Abtransport der Bauwerkschadstoffe BSS aus dem betroffenen Bauwerk B zu einem Behandlungsort BO bzw. einem Entsorgungsort oder zu einem Recyclingort steuern. Weiterhin können die Steuersignale die physikalische, chemische oder biologische Behandlung der transportierten Bauwerkschadstoffe BSS an den Behandlungsort BO, Entsorgungsort oder Recyclingort steuern bzw. regeln. Der Abtransport des Bauwerkschadstoffes BSS aus dem betroffenen Bauwerk B durch die auf dem Rechner R implementierte Auswerteeinheit AE des Systems SYS wird vorzugsweise logistisch auf Grundlage des gespeicherten Bauwerkplanes BPL des betreffenden Bauwerkes B sowie eines gespeicherten Umgebungsplanes der Umgebung des Bauwerkes B sowie auf Basis lokal vorhandener Transportressourcen, insbesondere vorhandener Transportfahrzeuge TF, zu dem geeigneten Behandlungsort BO, Entsorgungsort oder Recyclingort, welcher sich vorzugsweise in der Nähe des betreffenden Bauwerkes B befindet, gesteuert. Beispielsweise ermittelt die Auswerteeinheit AE vorhandene Transportressourcen bzw. Transportfahrzeuge TF, die sich in der Nähe des betroffenen Bauwerkes B befinden, und steuert logistisch den Abtransport der Bauwerkschadstoffe BSS aus dem betroffenen Gebäude B zu dem nächstgelegenen Behandlungsort BO.

Bei den Bauwerkschadstoffen BSS kann es sich um unterschiedliche umweltgefährdende und/oder gesundheitsgefährdende Stoffe handeln. Diese Stoffe umfassen feste, flüssige oder gasförmige Stoffe, die in oder an Bauelementen des Bauwerkes B vorhanden sind und bei Herstellung des Bauwerkes B oder bei Nutzung des Bauwerkes B entstehen. Beispielsweise kann es sich bei den Bauwerkschadstoffen BSS auch um eine Sekundärkontamination beispielsweise von PCB, handeln. Durch die Ansteuerung der Transportressourcen bzw. Transportfahrzeuge TF kann der Abtransport von Bauwerkschadstoffen BSS und deren Behandlung bzw. Entsorgung deutlich beschleunigt werden.

Die erfassten fundortbezogenen Schadstoffdaten SSD umfassen vorzugsweise Fundortdaten FOD, die den Schadstofffundort SSFO eines detektierten Bauwerkschadstoffes BSS, insbesondere eines Gebäudeschadstoffes, welcher innerhalb des Gebäudes B oder in oder an einem Gebäude B (z.B. Fassade, Dach) vorhanden ist, angeben. Bei einer möglichen Ausführungsform werden die Fundortdaten FOD durch das tragbare Feldgerät FG automatisch generiert. Die Fundortdaten FOD des Schadstofffundortes SSFO umfassen bei einer möglichen Ausführungsform einen Bauwerkeidentifizierer BID des betroffenen Bauwerkes B sowie einen Identifizierer PID, der die Daten erfassende Person P, insbesondere eines Gutachters, welcher die fundortbezogenen Schadstoffdaten SSD erfasst. Weiterhin können die Fundortdaten FOD des Schadstofffundortes SSFO beispielsweise eine Stockwerknummer eines Stockwerkes innerhalb des Bauwerkes B beinhalten. Bei dem in Figur 1 dargestellten Beispiel umfassen die Fundortdaten FOD beispielsweise die Stockwerknummer I des ersten Stockwerkes innerhalb des Gebäudes B. Weiterhin umfassen die Fundortdaten FOD vorzugsweise eine Raumnummer eines Bauwerkraumes bzw. Gebäuderaumes BR innerhalb des Bauwerkes bzw. Gebäudes B, wie in Figur 1 dargestellt. Bei einer weiteren möglichen Ausführungsform umfassen die Fundortdaten FOD des Schadstofffundortes SSFO ferner Positionskoordinaten des Schadstofffundortes SSFO, beispielsweise drei kartesische Positionskoordinaten x, y, z des Schadstofffundortes SSFO innerhalb des Bauwerkraumes BR des Bauwerkes B. Das Feldgerät FG kommuniziert über einen Zugangspunkt AP und das Datennetzwerk DNW mit der auf dem Rechner R implementierten Auswerteeinheit AE. Der Zugangspunkt AP stellt eine drahtlose Verbindung zwischen der Datenschnittstelle DSS des Feldgerätes FG und dem Datennetzwerk DNW her. Der Zugangspunkt AP kann sich dabei innerhalb oder außerhalb des Bauwerkes B befinden. Beispielsweise wird eine Bluetooth- oder WLAN-Verbindung zwischen dem tragbaren Feldgerät FG und dem Zugangspunkt AP hergestellt, sodass die von dem Feldgerät FG erfassten fundortbezogenen Schadstoffdaten SSD einschließlich der Fundortdaten FOD drahtlos zu dem Datennetzwerk DNW gelangen, das die Daten an den Rechner R überträgt. Bei dem Datennetzwerk DNW kann es sich um ein lokales Netzwerk oder um ein globales Datennetzwerk, insbesondere das Internet, handeln. Bei einer möglichen Ausführungsform erfolgt die Übertragung der Daten, d.h. der Schadstoffdaten SSD einschließlich der Fundortdaten FOD, vorzugsweise verschlüsselt bzw. anonymisiert.

Die von dem Feldgerät FG erfassten fundortbezogenen Schadstoffdaten SSD enthalten Materialdaten hinsichtlich biologischer, chemischer und/oder physikalischer Eigenschaften des detektierten Bauwerkschadstoffes BSS. Weiterhin können die erfassten fundortbezogenen Schadstoffdaten SSD Messdaten enthalten, die mittels Sensoren S erzeugt werden. Diese Sensoren S können in dem Feldgerät FG integriert sein. Die durch die Sensoren S generierten Sensordaten beschreiben biologische, chemische und/oder physikalische Eigenschaften des an dem Schadstofffundort SSFO detektierten Bauwerkschadstoffes BSS. Bei einer möglichen Ausführungsform kann ein Sensor S einen Messdatensatz mit einer Vielzahl von Messdaten, die über einen bestimmten Zeitraum generiert werden, erzeugen und an die Auswerteeinheit AE des Systems SYS über das Datennetzwerk DNW übertragen. Beispielsweise kann lokal vor Ort an dem Schadstofffundort SSFO ein Bauwerkschadstoff BSS mittels eines Sensors S untersucht werden, der für einen vorgegebenen Messzeitraum einen Messdatensatz liefert. Beispielsweise kann eine Sonde bzw. ein Sensor an einen Bauwerkschadstoff BSS für eine Minute gehalten werden und ein entsprechender Messdatensatz mit einer Vielzahl von Messwerten generiert werden, die von dem tragbaren Feldgerät FG in einem Datenpaket oder Datensatz an die Auswerteeinheit AE des Rechners R übertragen werden. Verschiedene Sensoren S können verschiedene physikalische, chemische oder biologische Eigenschaften erfassen und entsprechende Messdatensätze generieren.

Bei einer weiteren möglichen Ausführungsform umfassen die erfassten fundortbezogenen Schadstoffdaten SSD Kamerabilddaten KBD bzw. Videodaten des an dem Schadstofffundort SSFO detektierten Bauwerkschadstoffes BSS. Die Kamerabilddaten KBD werden vorzugsweise durch eine Kamera K generiert, die in dem tragbaren Feldgerät FG oder in einem mit dem Feldgerät FG gekoppelten Handy des Gutachters P integriert ist. Weiterhin können die fundortbezogenen Schadstoffdaten SSD eine maschinenlesbare Beschreibung des aufgetretenen Bauwerkschadens und/oder Bauwerkschadstoffes BSS beinhalten. Darüber hinaus kann eine Positionierungseinheit PE Positionskoordinaten PK des Schadstofffundortes SSFO bereitstellen. Diese Positionierungseinheit PE ist vorzugsweise ebenfalls in dem tragbaren Feldgerät FG integriert. Darüber hinaus kann das Feldgerät FG bei einer möglichen Ausführungsform über einen Höhensensor verfügen, der eine Höhe oder Stockwerknummer des Schadstofffundortes SSFO liefert. Bei einer weiteren möglichen Ausführungsform umfassen die erfassten fundortbezogenen Schadstoffdaten SSD zusätzlich mittels eines Mikrofons M eingegebene Audioaufzeichnungen zur Beschreibung des aufgetretenen Bauwerkschadens und/oder Bauwerkschadstoffes BSS. Weiterhin können die fundortbezogenen Schadstoffdaten SSD Zeitdaten beinhalten, welche einen Zeitpunkt der Erfassung der fundortbezogenen Schadstoffdaten SSD angeben. Diese Zeitdaten werden beispielsweise durch einen in dem Feldgerät FG integrierten Zeitgeber ZG erzeugt. Alternativ kann das Feldgerät FG die Zeitdaten auch durch einen entfernt gelegenen Zeitgeber ZG des Systems SYS erhalten, welcher sich beispielsweise in dem Rechner R des Systems SYS befindet. Die verschiedenen fundortbezogenen Schadstoffdaten SSD werden vorzugsweise durch eine Recheneinheit DVE innerhalb des Feldgerätes FG zu einem kompletten komplexen Datensatz mit einheitlichem Datenformat automatisch zusammengefasst, welcher den Schadstofffundort SSFO und den ermittelten Bauwerkschadstoff BSS umfassend beschreibt.

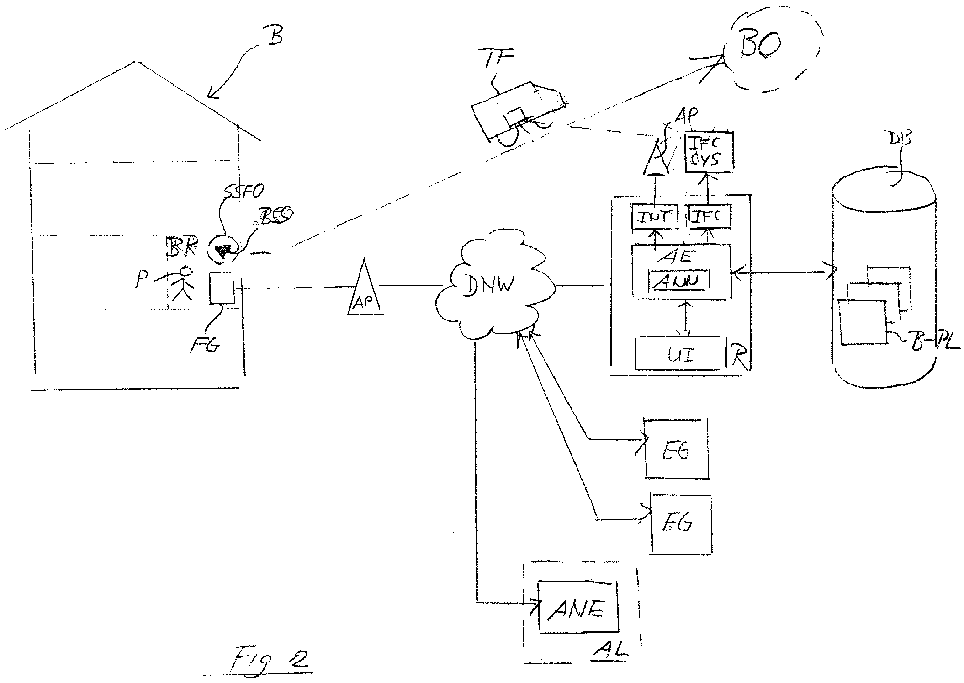

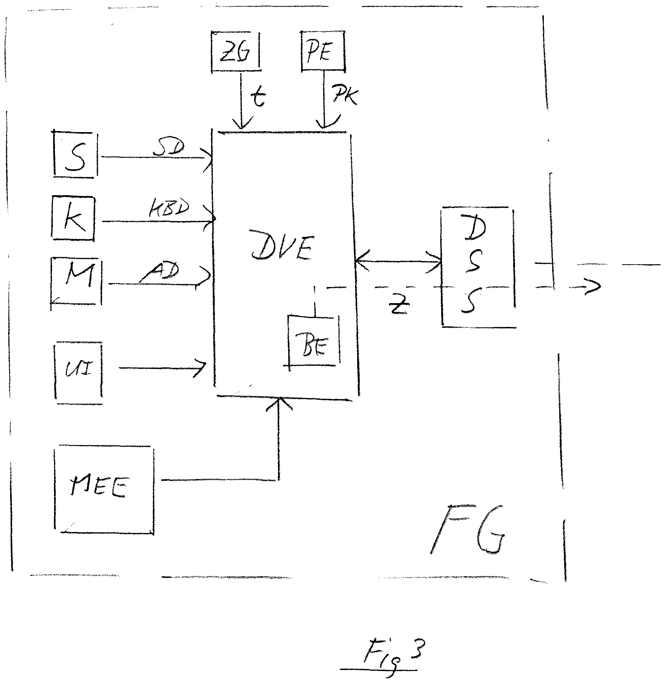

Figur 3 zeigt ein Blockschaltbild eines möglichen Ausführungsbeispiels eines bei dem erfindungsgemäßen System SYS verwendbaren Feldgerätes FG. Wie man in Figur 3 erkennen kann, verfügt das Feldgerät FG über Sensoren S zur Erzeugung von Sensordaten SD bzw. Messdaten hinsichtlich des detektierten Bauwerkschadstoffes BSS. Weiterhin verfügt das dort dargestellte Feldgerät FG über einen Kamera K zur Erzeugung von Kamerabilddaten KBD bzw. Videodaten des an dem Schadstofffundort SSFO detektierten Bauwerkschadstoffes BSS. Darüber hinaus verfügt das Feldgerät FG bei dem dargestellten Ausführungsbeispiel über ein Mikrofon M zur Eingabe von Audioaufzeichnungen, welche den aufgetretenen Bauwerkschaden und/oder den Bauwerkschadstoff BSS beschreiben. Darüber hinaus verfügt das Feldgerät FG über eine Tastatur UI bzw. Nutzerinterface zur Eingabe einer maschinenlesbaren Beschreibung des aufgetretenen Bauwerkschadens und/oder Bauwerkschadstoffes BSS. Bei dem in Figur 3 dargestellten Ausführungsbeispiel beinhaltet das Feldgerät FG zudem einen Zeitgeber ZG, welcher Zeitdaten liefert, welche einen Zeitpunkt der Erfassung der fundortbezogenen Schadstoffdaten SSD angeben. Weiterhin verfügt das Feldgerät FG bei dem dargestellten Ausführungsbeispiel über eine Positionierungseinheit PE zur automatischen Ermittlung von Positionskoordinaten PK des Schadstofffundortes SSFO. Beispielsweise handelt es sich bei der Positionierungseinheit PE um einen GPS-Empfänger. Weiterhin können beispielsweise auch GLONASS- oder Galileo-Empfänger verwendet werden. Alternativ können die Positionskoordinaten PK des Schadstofffundortes SSFO auch durch den Nutzer P mithilfe der Eingabetastatur oder einer graphischen Nutzerschnittstelle GUI eingegeben werden. Beispielsweise wird auf einer Anzeigeeinheit des Feldgerätes FG bzw. einem Display ein Bauplan BPL, beispielsweise eine Schnittansicht des Gebäudes bzw. Bauwerkes B, wie in den Figuren 1, 2 dargestellt, angezeigt und der Nutzer bzw. Gutachter P kann auf dem Touchscreen den Schadstofffundort SSFO selektieren. Der Nutzer bzw. die erfassende Person P tritt beispielsweise in einem angezeigten Bauwerkraum bzw. Gebäuderaum BR an eine bestimmte Stelle, um den Schadstofffundort SSFO zu selektieren. Bei einer möglichen Implementierung wird ein Menü generiert, das alle wesentlichen potentiell vorhandenen Bauwerkschadstoffe BSS anzeigt. Der Nutzer bzw. Gutachter P kann aus dem angezeigten Menü bzw. angezeigten Liste von Bauwerkschadstoffen BSS den betreffenden von ihm erkannten oder vermuteten und später durch Laboranalyse verifizierten bzw. falsifizierten oder sensorisch detektierten Bauwerkschadstoff BSS auswählen. Alternativ kann aufgrund der vor Ort ermittelten Materialdaten, Sensordaten und Kamerabilddaten KBD durch die Datenverarbeitungseinheit DVE des Feldgerätes FG bereits ein zu den Messdaten bzw. Sensordaten SD passender möglicher Bauwerkschadstoff BSS ausgewählt bzw. angezeigt werden, der beispielsweise von dem Nutzer bzw. Gutachter P bestätigt wird. Bei einer bevorzugten Ausführungsform werden dabei zusätzlich der Bauplan BPL des Bauwerkes B mitberücksichtigt. Beispielsweise ist aus dem Bauplan BPL bekannt, dass an einer bestimmten Stelle innerhalb des Bauwerkraumes BR ein bestimmter Bauwerkstoff verbaut worden ist, der einen Bauwerkschadstoff BSS bildet. Beispielsweise kann aus einem Bauplan BPL bekannt sein, dass eine Asbestplatte an einer bestimmten Stelle innerhalb eines Bauwerkraumes BR verbaut worden ist. Selektiert der Gutachter bzw. Nutzer P diesen Bauort als Schadstofffundort SSFO, kann vorzugsweise aus dem Bauplan BPL dieser Bauwerkschadstoff BSS entnommen werden und über ein Nutzerinterface UI des Feldgerätes FG dem Gutachter P angezeigt werden. Bei einer weiteren möglichen Ausführungsform werden die Sensordaten bzw. Materialdaten, die mithilfe von Sensoren S oder Sonden des Feldgerätes FG generiert werden, mit den Bauplandaten, insbesondere den darin enthaltenen Baustoffdaten, verglichen. Der Vergleich der Sensor- bzw. Materialdaten mit den in dem Bauplan BPL angegebenen Baustoffdaten erfolgt durch die auf dem Rechner R implementierte Auswerteeinheit AE. Beispielsweise kann es vorkommen, dass die Sensordaten bzw. Materialdaten der übermittelten Schadstoffdaten SSD nicht mit den Baustoffdaten der Baupläne BPL übereinstimmen, sodass eine eingehende Analyse der übermittelten Schadstoffdaten SSD erforderlich ist.

Bei einer weiteren möglichen Ausführungsform des erfindungsgemäßen Systems SYS verfügt das tragbare Feldgerät FG über eine integrierte oder daran anschließbare Materialentnahmeeinheit MEE wie in Figur 3 dargestellt. Die Materialentnahmeeinheit MEE dient zur Entnahme einer Materialprobe eines potentiellen Bauwerkschadstoffes BSS an dem Schadstofffundort SSFO. Darüber hinaus verfügt das tragbare Feldgerät FG über eine Datenverarbeitungseinheit DVE bzw. Materialanalyseeinheit, welche vor Ort eine Messung und/oder Analyse biologischer, chemischer und/oder physikalischer Eigenschaften eines in oder an dem Bauwerk B vorhandenen Bauwerkschadstoffes BSS durchführen kann. Die dabei ermittelten Materialeigenschaftsdaten werden über die Datenschnittstelle DSS des Feldgerätes FG an die auf dem Rechner R implementierte Auswerteeinheit AE des Systems SYS oder an die zentrale Datenbank DB des Systems SYS übertragen. Das tragbare Feldgerät FG kann die von der Materialanalyseeinheit bzw. Datenverarbeitungseinheit DVE des Feldgerätes FG ermittelten Materialeigenschaftsdaten eines an dem Schadstofffundort SSFO vorhandenen potentiell gesundheitsgefährdenden und/oder umweltgefährdenden Bauwerkschadstoffes BSS an die auf dem Rechner R, beispielsweise einem Server, implementierte Auswerteeinheit AE über das Datennetzwerk DNW übertragen. Die Auswerteeinheit AE wertet die von dem Feldgerät FG empfangenen Materialeigenschaftsdaten auf Grundlage von in der Datenbank DB des Systems SYS gespeicherten Schadstoffdaten SSD einer Vielzahl von bekannten Bauwerkschadstoffen BSS zur Erkennung einer Art des an dem Schadstofffundort SSFO vorhandenen Bauwerkschadstoffes BSS automatisch aus. Die Auswerteeinheit AE vergleicht somit die bekannten Eigenschaften von bekannten Bauwerkschadstoffen BSS mit den empfangenen Materialeigenschaftsdaten, um festzustellen, um welche Art eines Bauwerkschadstoffes BSS es sich handelt. Beispielsweise können die übertragenen Materialeigenschaftsdaten den gesuchten Stoff als Bauwerkschadstoff BSS kennzeichnen, der in einer Liste von bekannten Bauwerkschadstoffen BSS enthalten ist. Die Materialeigenschaftsdaten geben biologische, chemische und/oder physikalische Eigenschaften des untersuchten Stoffes wieder. Weiterhin kann anhand der Materialeigenschaftsdaten durch die Auswerteeinheit AE ein Ausmaß der Kontaminierung bzw. Gefährdung für die Umwelt und/oder für Personen automatisch ermittelt werden. Werden beispielsweise bestimmte Grenzwerte oder Konzentrationen überschritten, kann zusätzlich durch die Auswerteeinheit AE ein Alarmsignal erzeugt werden, welches beispielsweise an das Feldgerät FG und/oder ein Handy der Person P übertragen wird. Auf diese Weise kann die sich vor Ort befindende Person P, beispielsweise ein Gutachter, über die Kontamination bzw. die von dem Bauwerkschadstoff BSS ausgehende Gefährdung informiert werden und vor Ort entsprechende Gegenmaßnahmen treffen. Beispielsweise kann der Nutzer bzw. der Gutachter P, der sich in dem Bauwerk B befindet, dazu veranlasst werden, eine Atemschutzmaske aufzusetzen oder einen Schutzanzug anzuziehen. Die durch das tragbare Feldgerät FG lokal erfassten fundortbezogenen Schadstoffdaten SSD werden über eine Datenschnittstelle DSS des Feldgerätes FG und das Datennetzwerk DNW an die zentrale Datenbank DB des Systems SYS übertragen, auf welche der Rechner R des Systems SYS mit der darin implementierten Auswerteeinheit AE Zugriff hat, wie in den Figuren 1, 2 dargestellt. Die zentrale Datenbank DB des Systems SYS speichert Bauwerkpläne BPL einer Vielzahl von Bauwerken B, insbesondere Gebäuden, unterschiedlicher Bauwerke- bzw. Gebäudebetreiber sowie eine Vielzahl von Schadstoffdaten unterschiedlicher Bauwerkschadstoffe BSS.

Wie in Figur 2 dargestellt, können Endgeräte EG verschiedener Bauwerkebetreiber über das Datennetzwerk DNW mit dem Managementserver des Systems SYS zum Hochladen und/oder Anpassen von Bauwerkplänen BPL und/oder Bauwerkdaten, insbesondere Baustoffdaten von Bauelementen des Bauwerkes B verbunden sein. Diese digitalen Bauwerkpläne BPL und Bauwerkdaten werden innerhalb der zentralen Datenbank DB des Systems SYS gespeichert. Die fundortbezogenen Schadstoffdaten SSD von Bauwerkschadstoffen BSS, die innerhalb eines Bauwerkes B bzw. Gebäudes eines Bauwerkebetreibers bzw. Gebäudebetreibers detektiert werden, können an den Endgeräten EG des betreffenden Bauwerkebetreibers gefiltert angezeigt werden. Auf diese Weise hat ein Gebäudebetreiber, beispielsweise eine Investmentgesellschaft oder eine Hausverwaltung (Facility Management), unmittelbar Zugang zu den relevanten Daten, insbesondere zu Daten hinsichtlich Bauwerkschadstoffen BSS bzw. Gebäudeschadstoffen.

Die an dem Schadstofffundort SSFO durch die Materialentnahmeeinheit MEE des Feldgerätes FG lokal entnommenen Materialprobe eines Bauwerkschadstoffes BSS kann bei einer möglichen Ausführungsform zusammen mit Probenbegleitdaten an eine Analyseeinheit ANE eines selektierten Analyselabors AL übersandt werden, wie in Figur 2 schematisch dargestellt. Die Analyseeinheit ANE des Analyselabors AL nimmt eine Materialanalyse der empfangenen Materialprobe vor und übermittelt die dabei ermittelten biologischen, chemischen oder physikalischen Eigenschaften der Materialprobe als fundortbezogene Schadstoffdaten SSD zusammen mit den Probenbegleitdaten an die auf dem Rechner R implementierte Auswerteeinheit AE des Systems SYS und/oder an die zentrale Datenbank DB des Systems SYS. Die Probenbegleitdaten können bei einer möglichen Ausführungsform einen Probenidentifizierer, einen Entnahmeort bzw. Fundort der Materialprobe, ein Entnahmedatum, einen Entnahmezeitpunkt der Materialprobe und/oder eine Angabe über die Probenart der Materialprobe enthalten. Bei dem in Figur 3 dargestellten Feldgerät FG kann es sich beispielsweise um ein entsprechend ausgestattetes Eingabetablet handeln. Bei einer weiteren möglichen Ausführungsform umfasst das mobile tragbare Feldgerät FG ein Augmented Reality-Eingabegerät, welches von dem Nutzer, beispielsweise einem Gutachter, an seinem Kopf getragen wird. Dabei können beispielsweise Baupläne BPL des Bauwerkes B als Augmented Reality angezeigt werden, während sich der Gutachter innerhalb des realen Gebäudes B bewegt. Bauteile werden dabei vorzugsweise mit Informationen angereichert angezeigt.

Bei einer weiteren möglichen Ausführungsform des erfindungsgemäßen Systems SYS, wie es in Figur 2 dargestellt ist, enthält die auf dem Rechner R implementierte Auswerteeinheit AE ein maschinenlernbares artifizielles neuronales Netzwerk ANN. Bei einer möglichen Ausführungsform ist das artifizielle neuronale Netzwerk ANN in einer Trainingsphase mit fundortbezogenen Schadstoffdaten zur Erkennung von Schadensmustern trainierbar.

Bei dem in Figur 3 dargestellten tragbaren Feldgerät FG verfügt dieses über eine Berechnungseinheit BE innerhalb der Datenverarbeitungseinheit DVE. Bei der in Figur 3 dargestellten Ausführungsform werden für die erfassten fundortbezogenen Schadstoffdaten SSD und/oder Probenbegleitdaten durch die Berechnungseinheit BE des Feldgerätes FG automatisch ein digitales Zertifikat Z berechnet, welches die Erfassung der fundortbezogenen Schadstoffdaten SSD und/oder die Entnahme einer Materialprobe am Schadstofffundort SSFO innerhalb des Bauwerkes B durch das tragbare Feldgerät FG zertifiziert. Das berechnete Zertifikat Z wird vorzugsweise zusammen mit den Schadstoffdaten SSD und/oder Probenbegleitdaten über eine Datenschnittstelle DSS des Feldgerätes FG zu der auf dem Rechner R implementierten Auswerteeinheit AE und/oder zu der Datenbank DB des Systems SYS übertragen. Weiterhin kann das berechnete Zertifikat Z bei einer möglichen Ausführungsform an ein selektiertes Analyselabor AL, wie in Figur 2 dargestellt, übermittelt werden. Anhand des digitalen Zertifikates Z kann bewiesen werden, dass die fundortbezogenen Schadstoffdaten SSD tatsächlich an dem betreffenden Schadstofffundort SSFO erfasst wurden. Dies kann insbesondere bei einer gerichtlichen Auseinandersetzung von Bedeutung sein, bei der ein Gutachten von einer beteiligten Partei eingebracht wird.

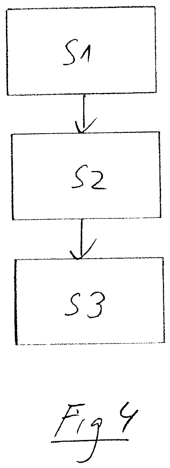

Figur 4 zeigt ein Ablaufdiagramm zur Darstellung eines Ausführungsbeispiels eines erfindungsgemäßen Verfahrens zum Bereitstellen von Anweisungen für die Behandlung von Bauwerkschadstoffen BSS.

Bei dem in Figur 4 dargestellten einfachen Ablaufdiagramm umfasst das Verfahren im Wesentlichen drei Hauptschritte. In einem ersten Schritt S1 werden fundortbezogene Schadstoffdaten SSD von Bauwerkschadstoffen BSS an Schadstofffundorten SSFO betroffener Bauwerke B erfasst. Die Erfassung der fundortbezogenen Schadstoffdaten SSD kann dabei mithilfe eines Feldgerätes FG, wie es beispielsweise in Figur 3 dargestellt ist, erfolgen. Alternativ können die fundortbezogenen Schadstoffdaten über eine Nutzerschnittstelle UI des Rechners R eingegeben werden.

In einem weiteren Schritt S2 werden die fundortbezogenen Schadstoffdaten SSD an die auf dem Rechner R implementierte Auswerteeinheit AE und/oder zu einer Datenbank DB übermittelt.

In einem weiteren Schritt S3 werden die übermittelten fundortbezogenen Schadstoffdaten SSD durch die auf dem Rechner R implementierte Auswerteeinheit AE auf Grundlage von in der Datenbank DB gespeicherten Bauwerkplänen BPL des betroffenen Bauwerkes B zur automatischen Generierung von Anweisungen und/oder Steuersignalen für die Behandlung von als gesundheitsgefährdend und/oder umweltgefährdend erkannten Bauwerkschadstoffen BSS des betroffenen Bauwerkes B und/oder zur Verwaltung von Schadstoffdaten SSD ausgewertet.

Bei dem erfindungsgemäßen Verfahren erfolgt die Eingabe von fundortbezogenen Schadstoffdaten von Bauwerkschadstoffen an Schadstofffundorten SSFO betroffener Bauwerke B mithilfe eines tragbaren Feldgerätes FG, insbesondere mithilfe eines Tablets. Die Eingabe erfolgt durch einen Nutzer bzw. Gutachter P vor Ort. Ferner kann der Nutzer bzw. die begutachtende Person P Proben an dem Schadstofffundort SSFO entnehmen. Diese Proben werden in einer möglichen Ausführungsform an ein Analyselabor versendet. Eine Analyseeinheit AE des Analyselabors kann eine Materialanalyse der empfangenen Materialprobe vornehmen und die dabei ermittelten biologischen, chemischen und/oder physikalischen Eigenschaften der Materialprobe als fundortbezogene Schadstoffdaten einzelner Laborergebnisse an die zentrale Datenbank DB des Systems übermitteln. Alternativ können die Laborergebnisse in die Datenbank DB durch die begutachtende Person P über eine Nutzerschnittstelle des Rechners R eingegeben werden. Durch das System erfolgt eine Bewertung aufgrund der Laborergebnisse und/oder auf Basis der über das Tablet FG eingegebenen fundortbezogenen Schadstoffdaten. Die begutachtende Person P kann die Laborergebnisse bzw. die Laborbefunde manuell in das System einpflegen. Weiterhin kann die begutachtende Person P über eine Nutzerschnittstelle Empfehlungen für die weitere Vorgehensweise in das System eingeben.

Das in Figur 4 dargestellte Verfahren wird vorzugsweise durch ein entsprechendes Programm, das auf einem Prozessor der Auswerteeinheit AE implementiert ist, ausgeführt. Bei einer möglichen Ausführungsform wird das erfindungsgemäße Verfahren durch die Übertragung eines Datensatzes, welcher fundortbezogene Schadstoffdaten SSD beinhaltet, ausgelöst bzw. gestartet. Bei einer möglichen Ausführungsform werden die fundortbezogenen Schadstoffdaten SSD, welche beispielsweise von einem Feldgerät FG an den Rechner R übertragen werden, zunächst in einem lokalen Speicher des Rechners R oder in der Datenbank DB zwischengespeichert und zu einem späteren Zeitpunkt ausgewertet. Bei einer möglichen Ausführungsform kann die Auswerteeinheit AE mithilfe der übertragenen fundortbezogenen Schadstoffdaten SSD einschließlich der Fundortdaten FOD einen Schadensreport automatisch generieren, der über eine Schnittstelle des Rechners R ausgegeben wird. Mithilfe des erfindungsgemäßen Systems SYS kann somit bei einer möglichen Ausführungsform automatisch ein Schadensreport bzw. ein einfaches Gutachten innerhalb kürzester Zeit generiert werden, welches als Arbeitsgrundlage zur Ausformulierung eines vollständigen Gutachtens dienen kann. Bei einer weiteren möglichen Ausführungsform wird der automatisch generierte Schadensreport über das Datennetzwerk DNW und die Endgeräte EG den verschiedenen Bauwerkebetreibern übermittelt.

Das Feldgerät FG und/oder der Rechner R verfügen bei einer möglichen Ausführungsform jeweils über eine IFC-Datenschnittstelle. Über die IFC-Datenschnittstelle können Daten in einem IFC-Datenformat bzw. in IFC-Dateien übertragen werden. Das Industry Foundation Classes IFC-Datenformat bietet einen offenen Standard zur digitalen Beschreibung von Gebäude- bzw. Bauwerkmodellen (Building Information Modeling) BIM. Building Information Modeling beschreibt eine Vorgehensweise zur optimierten Planung, Ausführung und Bewirtschaftung eines Gebäudes bzw. Bauwerkes B. Dabei können alle relevanten Bauwerkdaten digital erfasst, kombiniert und vernetzt werden. Ein BIM-Datenmodell kann ein physikalisches Bauwerk B digital weitgehend vollständig abbilden. Das BIM-Datenmodell bietet den Vorteil, dass unterschiedliche Anbieter von Bausoftware durch die IFC-Schnittstelle miteinander Informationen austauschen können. Beispielsweise können Architekten, Fachplaner, Kostenplaner und Bauwerkbetreiber gemeinsam ein BIM-Datenmodell erstellen und während des gesamten Lebenszyklus des Bauwerkes B anpassen bzw. ändern. Über die IFC-Datenschnittstelle kann das erfindungsgemäße System SYS mit einem IFC-System bzw. BIM-System gekoppelt werden. Das erfindungsgemäße System SYS kann dabei ein vorhandenes BIM-System hinsichtlich der Behandlung von Bauwerkschadstoffen BSS bzw. Gebäudeschadstoffen erweitern und eine Vielzahl zusätzlicher Funktionen zur Behandlung von Bauwerkschadstoffen BSS zur Verfügung stellen.

Weitere Ausführungsformen des erfindungsgemäßen Systems SYS sind möglich. Beispielsweise kann die Materialentnahmeeinheit MEE, welche in dem Feldgerät FG integriert oder daran gekoppelt ist, neben Materialproben auch Raumluftproben, Klebeproben, Rückstellproben oder Mischproben am Schadstofffundort SSFO entnehmen, wobei die Analyse entweder vor Ort durch die Materialanalyseeinheit des Feldgerätes FG oder durch eine Analyseeinheit ANE eines selektierten Analyselabors AL erfolgt. Dabei kann die Analyse auch mehrstufig erfolgen. Beispielsweise kann durch eine Materialanalyseeinheit des Feldgerätes FG festgestellt werden, zu welcher Gruppe von Stoffen der betreffende Bauwerkschadstoff BSS gehört und die weitere Analyse durch eine Analyseeinheit ANE eines hierfür spezialisierten Analyselabors AL erfolgen. Bei einer möglichen Ausführungsform wird das erfindungsgemäße System SYS und Verfahren während einer Renovierung bzw. Sanierung eines Bauwerkes B durchgeführt, um gezielt Bauwerkschadstoffe BSS abzutransportieren bzw. zu entsorgen oder zu recyceln. Weiterhin kann das erfindungsgemäße Verfahren auch bereits während der Planung des Bauwerkes B bzw. Gebäudes eingesetzt werden, um den Umgang mit Baustoffen bzw. Bauwerkschadstoffen BSS zu planen bzw. zu simulieren.

Bei einer weiteren möglichen Ausführungsform können verschiedene Schadstofffundorte SSFO innerhalb eines Bauwerkes B und deren zugehörige erkannte Bauwerkschäden durch die Auswerteeinheit AE bei einer gesamtheitlichen Betrachtung ausgewertet werden, um Zusammenhänge zwischen verschiedenen Schadstofffundorten SSFO innerhalb eines Bauwerkes im Zuge einer Root-Cause-Analyse zu ermitteln.

### BEZUGSZEICHEN

- AE: Auswerteeinheit
- AL: Analyselabor
- ANE: Analyseeinheit
- ANN: artifizielles neuronales Netzwerk
- AP: Zugangspunkt
- B: Bauwerk
- BO: Behandlungsort
- BR: Bauwerkraum
- BPL: Bauwerkplan
- BSS: Bauwerkschadstoff
- DB: Datenbank
- DNW: Datennetzwerk
- DSS: Datenschnittstelle
- EG: Endgerät
- FG: Feldgerät
- INT: Schnittstelle
- IFC: IFC-Schnittstelle
- P: Nutzer bzw. Gutachter
- R: Rechner
- SSFO: Schadstofffundort
- TF: Transportfahrzeug
- UI: Nutzerschnittstelle
- S: Sensor
- SD: Sensordaten
- K: Kamera
- KBD: Kamerabilddaten
- M: Mikrophon
- AD: Audiodaten
- MEE: Materialentnahmeeinheit
- BE: Berechnungseinheit
- DSS: Datenschnittstelle
- T: Transceiver
- PR: Probe
- Z: Zertifikat
- ZG: Zeitgeber
- PE: Positioniereinheit
- PK: Positionskoordinaten

## Patentansprüche

1. System zur Behandlung von Bauwerkschadstoffen (BSS), umfassend eine Auswerteeinheit (AE), die auf einem Rechner (R), insbesondere Server implementiert ist, eine zentrale Datenbank (DB), auf die die Auswerteeinheit (AE) zugriff hat, und ein mobiles tragbares Feldgerät (FG), das eine Datenschnittstelle (DSS) zu der Auswerteeinheit (AE) und zu der Datenbank (DB) aufweist,
wobei das System ausgebildet ist, fundortbezogene Schadstoffdaten (SSD) von Bauwerkschadstoffen (BSS) an Schadstofffundorten (SSFO) mindestens eines betroffenen Bauwerkes (B), insbesondere eines Gebäudes, lokal zu erfassen, und die Auswerteeinheit (AE) ausgebildet ist, die erfassten fundortbezogenen Schadstoffdaten (SSD) auf Grundlage eines in der zentralen Datenbank (DB) gespeicherten Bauwerkplanes (BPL) des betroffenen Bauwerkes (B) auszuwerten und Anweisungen und/oder Steuersignale zur Behandlung von Bauwerkschadstoffen (BSS) und/oder zur Verwaltung von Schadstoffdaten (SSD) zu generieren, wobei das Feldgerät (FG) ausgebildet ist, die fundortbezogenen Schadstoffdaten (SSD) von Bauwerkschadstoffen (BSS) an Schadstofffundorten (SSFO) vor Ort zu erfassen und über die Datenschnittstelle (DSS) die fundortbezogenen Schadstoffdaten (SSD) an die Auswerteeinheit (AE) und/oder die zentrale Datenbank (DB) zu übertragen, wobei das tragbare Feldgerät (FG) eine Datenverarbeitungseinheit (DVE) aufweist, die zur Vor-Ort-Messung und/oder Vor-Ort-Analyse biologischer, chemischer und/oder physikalischer Eigenschaften eines in oder an dem Bauwerk (B) vorhandenen Bauwerkschadstoffes (BSS)ausgebildet ist, die als Materialeigenschaftsdaten über die Datenschnittstelle (DSS) des Feldgerätes (FG) an die auf dem Rechner (R) implementierte Auswerteeinheit (AE) des Systems und/oder an die zentrale Datenbank (DB) des Systems übertragbar sind.

2. System nach Anspruch 1,
wobei die auf dem Rechner (R) implementierte Auswerteeinheit (AE) des Systems ausgebildet ist, Anweisungen und/oder Steuersignale zum Umgang, zur Behandlung, zur Entsorgung und/oder zum Recycling von gesundheitsgefährdenden und/oder umweltgefährdenden Bauwerkschadstoffen (BSS) in Abhängigkeit der erfassten fundortbezogenen Schadstoffdaten (SSD) und des gespeicherten Bauwerkplanes (BPL) des betroffenen Bauwerkes (B) zu generieren und über eine Steuerschnittstelle (INT) und/oder eine IFC-Datenschnittstelle (IFC) auszugeben.

3. System nach einem der vorangehenden Ansprüche 1 bis 2, wobei das Feldgerät (FG) ausgebildet ist, die fundortbezogenen Schadstoffdaten (SSD) mit Fundortdaten (FOD) zu erfassen, die den Schadstofffundort (SSFO) eines detektierten Bauwerkschadstoffes (BSS), insbesondere eines Gebäudeschadstoffes, innerhalb des Gebäudes oder an dem Gebäude, angeben,
wobei die Fundortdaten (FOD) des Schadstofffundortes (SSFO)
- einen Bauwerkeidentifizierer (BID) des betroffenen Bauwerkes (B),
- einen Identifizierer (PID) der erfassenden Person P, insbesondere des Gutachters, welche die fundortbezogenen Schadstoffdaten (SSD) erfasst,
- eine Stockwerknummer eines Stockwerkes innerhalb des Bauwerkes (B),
- eine Raumnummer eines Bauwerkraumes (BR) innerhalb des Bauwerkes (B) und/oder
- Positionskoordinaten (PK) des Schadstofffundortes (SSFO) umfassen.

4. System nach einem der vorangehenden Ansprüche 1 bis 3, wobei das Feldgerät (FG) ausgebildet ist, die fundortbezogenen Schadstoffdaten (SSD) mit
- Materialdaten hinsichtlich biologischer, chemischer und/oder physikalischer Eigenschaften des detektierten Bauwerkschadstoffes (BSS),
- mittels Sensoren (S) erfasste Messdaten hinsichtlich des detektierten Bauwerkschadstoffes (BSS),
- Kamerabilddaten (KBD) des an dem Schadstofffundort (SSFO) detektierten Bauwerkschadstoffes (BSS),
- eine maschinenlesbare Beschreibung des aufgetretenen Bauwerkschadens und/oder Bauwerkschadstoffes (BSS),
- mittels einer Positionierungseinheit (PE) erfasste Positionskoordinaten (PK) des Schadstofffundortes (SSFO),
- eine mittels eines Höhensensors ermittelte Höhe oder Stockwerknummer des Schadstofffundortes (SSFO),
- eine mittels eines Mikrofons (M) eingegebene Audioaufzeichnung zur Beschreibung des aufgetretenen Bauwerkschadens und/oder Bauwerkschadstoffes (BSS), und
- Zeitdaten, welche einen Zeitpunkt der Erfassung der fundortbezogenen Schadstoffdaten (SSD) angeben, zu erfassen.

5. System nach einem der vorangehenden Ansprüche 1 bis 4, wobei das tragbare Feldgerät (FG) eine integrierte oder daran anschließbare Materialentnahmeeinheit (MEE) zur Entnahme einer Materialprobe eines potentiellen Bauwerkschadstoffes (BSS) an dem Schadstofffundort (SSFO) aufweist.

6. System nach einem der vorherigen Ansprüche 1 bis 5, wobei das tragbare Feldgerät (FG) ausgebildet ist, die von der Z P Datenverarbeitungseinheit (DVE) des Feldgerätes (FG) ermittelten Materialeigenschaftsdaten eines an dem Schadstofffundort (SSFO) vorhandenen potentiell gesundheitsgefährdenden und/oder umweltgefährdenden Bauwerkschadstoffes (BSS) an die auf dem Rechner (R) implementierte Auswerteeinheit (AE) zu übertragen, und wobei die Auswerteeinheit (AE) ausgebildet ist, die von dem Feldgerät (FG) empfangenen Materialeigenschaftsdaten auf Grundlage von in der Datenbank (DB) des Systems gespeicherten Schadstoffdaten (SSD) einer Vielzahl von bekannten Bauwerkschadstoffen (BSS) zur Erkennung einer Art des an dem Schadstofffundort (SSFO) vorhandenen Bauwerkschadstoffes (BSS) sowie eines Ausmaßes der von dem Bauwerkschadstoff (BSS) ausgehenden Gefährdung auszuwerten.

7. System nach einem der vorangehenden Ansprüche 1 bis 6, wobei das Feldgerät (FG) ausgebildet ist, die durch das tragbare Feldgerät (FG) lokal erfassten fundortbezogenen Schadstoffdaten (SSD) über die Datenschnittstelle (DSS) des Feldgerätes (FG) und ein Datennetzwerk (DNW) an die zentrale Datenbank (DB) des Systems zu übertragen, auf welche der Rechner (R), insbesondere Server, des Systems mit der darin implementierten Auswerteeinheit (AE) Zugriff hat,
wobei die zentrale Datenbank (DB) des Systems ausgebildet ist, Bauwerkpläne (BPL) einer Vielzahl von Bauwerken (B) unterschiedlicher Bauwerkebetreiber und eine Vielzahl von Schadstoffdaten (SSD) von Bauwerkschadstoffen (BSS) zu speichern.

8. System nach Anspruch 7,
wobei Endgeräte (EG) verschiedener Bauwerkebetreiber über ein Datennetzwerk (DNW) mit einem Managementserver des Systems zum Hochladen und/oder Anpassen von Bauwerkplänen (BPL) und/oder Bauwerkdaten, insbesondere Baustoffdaten von Bauelementen des Bauwerkes (B), verbunden sind, welche innerhalb der zentralen Datenbank (DB) des Systems gespeichert werden,
wobei die fundortbezogenen Schadstoffdaten (SSD) von Bauwerkschadstoffen (BSS), die innerhalb eines Bauwerkes (B) eines Bauwerkebetreibers detektiert werden, an Endgeräten (EG) des betreffenden Bauwerkebetreibers gefiltert anzeigbar sind.

9. System nach einem der vorangehenden Ansprüche 1 bis 8, wobei das mobile tragbare Feldgerät (FG) ein Eingabetablet oder ein Augmented Reality-Eingabegerät ist.

10. System nach einem der vorangehenden Ansprüche 1 bis 9, wobei die auf dem Rechner (R) implementierte Auswerteeinheit (AE) des Systems ausgebildet ist, anhand der fundortbezogenen Schadstoffdaten (SSD) einen Abtransport der Bauwerkschadstoffe (BSS) aus dem betroffenen Bauwerk (B) zu einem Behandlungsort, einem Entsorgungsort oder einem Recyclingort und/oder eine physikalische, chemische und/oder biologische Behandlung der Bauwerkschadstoffe (BSS) an dem Behandlungsort, Entsorgungsort oder Recyclingort in Abhängigkeit generierter Anweisungen und/oder Steuersignale zu steuern.

11. System nach Anspruch 10,
wobei die auf dem Rechner (R) implementierte Auswerteeinheit (AE) des Systems ausgebildet ist, den Abtransport der Bauwerkschadstoffe (BSS) aus dem betroffenen Bauwerk (B) auf Grundlage des gespeicherten Bauwerkplanes (BPL) des betreffenden Bauwerkes (B), eines gespeicherten Umgebungsplanes des Bauwerkes (B) und lokal vorhandener Transportressourcen, insbesondere Transportfahrzeugen (TF), zu einem geeigneten Behandlungsort, Entsorgungsort oder Recyclingort in der Nähe des betreffenden Bauwerkes (B) logistisch zu steuern.

12. System nach einem der vorangehenden Ansprüche 1 bis 11, wobei die auf dem Rechner (R) implementierte Auswerteeinheit (AE) ein maschinenlernbares artifizielles neuronales Netzwerk (ANN) aufweist, das mit fundortbezogenen Schadstoffdaten (SSD) zur Erkennung von Schadensmustern trainierbar ist.

13. System nach einem der vorangehenden Ansprüche 1 bis 12, wobei das Feldgerat (FG) eine Berechnungseinheit (BE) aufweist, die ausgebildet ist, für die erfassten fundortbezogenen Schadstoffdaten (SSD) und/oder Probenbegleitdaten ein Zertifikat (Z) zu berechnen, welches die Erfassung der fundortbezogenen Schadstoffdaten (SSD) und/oder die Entnahme einer Materialprobe an dem Schadstofffundort (SSFO) innerhalb des Bauwerkes (B) durch das tragbare Feldgerät (FG) zertifiziert,
wobei das Feldgerät (FG) ausgebildet ist, das berechnete Zertifikat (Z) zusammen mit den Schadstoffdaten (SSD) und/oder Probenbegleitdaten zu der auf dem Rechner (R) implementierten Auswerteeinheit (AE) und/oder zu der Datenbank (DB) des Systems und/oder zu einem Analyselabor (AL) zu übertragen.

14. Verfahren zum Bereitstellen von Anweisungen für die Behandlung von Bauwerkschadstoffen (BSS) mit den Schritten:
(a) Erfassen (S1) von fundortbezogenen Schadstoffdaten (SSD) von Bauwerkschadstoffen (BSS) an Schadstofffundorten (SSFO) betroffener Bauwerke (B), wobei die fundortbezogenen Schadstoffdaten (SSD) von Bauwerkschadstoffen (BSS) an Schadstofffundorten (SSFO) vor Ort mittels eines mobilen tragbaren Feldgerätes (FG) erfasst werden, wobei das tragbare Feldgerät (FG) eine Datenverarbeitungseinheit (DVE) zur Vor-Ort-Messung und/oder Vor-Ort-Analyse biologischer, chemischer und/oder physikalischer Eigenschaften eines in oder an dem Bauwerk (B) vorhandenen Bauwerkschadstoffes (BSS) aufweist, die als Materialeigenschaftsdaten übertragbar sind;
(b) Übermitteln (S2) der erfassten fundortbezogenen Schadstoffdaten (SSD) zu einer auf einem Rechner (R) implementierten Auswerteeinheit (AE) und/oder zu einer Datenbank (DB); und
(c) Auswerten (S3) der übermittelten fundortbezogenen Schadstoffdaten (SSD) durch die auf dem Rechner (R) implementierte Auswerteeinheit (AE) auf Grundlage von in der Datenbank (DB) gespeicherten Bauwerkplänen (BPL) des betroffenen Bauwerkes (B) zur automatischen Generierung von Anweisungen und/oder Steuersignalen für die Behandlung von als gesundheitsgefährdend und/oder umweltgefährdend erkannten Bauwerkschadstoffen (BSS) des betroffenen Bauwerkes (B) und/oder zur Verwaltung von Schadstoffdaten (SSD).

15. Verfahren nach Anspruch 14, welches folgende weitere Schritte umfasst:
Übersenden einer an dem Schadstofffundort (SSFO) durch eine Materialentnahmeeinheit (MEE) des Feldgerätes (FG) lokal entnommene Materialprobe des Bauwerkschadstoffes (BSS) zusammen mit Probenbegleitdaten an eine Analyseeinheit (ANE) eines selektierten Analyselabors (AL),
Vornehmen einer Materialanalyse der empfangenen Materialprobe durch das Analyselabor, und
Übermitteln der dabei ermittelten biologischen, chemischen und physikalischen Eigenschaften der Materialprobe als fundortbezogene Schadstoffdaten (SSD) zusammen mit den Probenbegleitdaten an die auf dem Rechner (R) implementierte Auswerteeinheit (AE) des Systems und/oder an die zentrale Datenbank (DB) des Systems,
wobei Probenbegleitdaten einen Probenidentifizierer, einen Entnahmeort bzw. Fundort der Materialprobe, ein Entnahmedatum der Materialprobe und/oder eine Angabe über die Probenart der Materialprobe aufweisen.

16. Verfahren nach einem der Ansprüche 14 oder 15,
wobei die Bauwerkschadstoffe (BSS) umweltgefährdende und/oder gesundheitsgefährdende feste, flüssige oder gasförmige Stoffe aufweisen, die in oder an Bauelementen des Bauwerkes (B) vorhanden sind.

## Claims

1. System for treatment of structure pollutants (BSS), comprising an evaluation unit (AE), which is implemented on a computer (R), in particular on a server, a central database (DB), to which the evaluation unit (AE) has access, and a mobile, portable field device (FG), which has a data interface (DSS) to the evaluation unit (AE) and to the database (DB),
wherein the system is configured to detect location-based pollutant data (SSD) of structure pollutants (BSS) locally at pollutant locations (SSFO) of at least one affected structure (B), in particular a building, and the evaluation unit (AE) is configured to evaluate the detected location-based pollutant data (SSD), on the basis of a structure plan (BPL) of the affected structure (B) stored in the central database (DB), and to generate instructions and/or control signals for treatment of structure pollutants (BSS) and/or for management of pollutant data (SSD),
wherein the field device (FG) is configured to detect the location-based pollutant data (SSD) of structure pollutants (BSS) at pollutant locations (SSFO) on site and to transmit the location-based pollutant data (SSD) to the evaluation unit (AE) and/or to the central database (DB) via the data interface (DSS),
wherein the portable field device (FG) includes a data processing unit (DVE) configured for on-site measurement and/or on-site analysis of biological, chemical and/or physical properties of a structure pollutant (BSS) present in or on the structure (B), which properties can be transmitted as material property data, via the data interface (DSS) of the field device (FG), to the evaluation unit (AE), implemented on the computer (R), of the system and/or to the central database (DB) of the system.

2. System according to claim 1,
wherein the evaluation unit (AE), implemented on the computer (R), of the system is configured to generate instructions and/or control signals for handling, treatment, disposal and/or recycling of structure pollutants (BSS) which are hazardous to health and/or to the environment, as a function of the detected location-based pollutant data (SSD) and of the stored structure plan (BPL) of the affected structure (B), and to output them via a control interface (INT) and/or an IFC data interface (IFC) .

3. System according to either of preceding claims 1 and 2, wherein the field device (FG) is configured to detect the location-based pollutant data (SSD) together with location data (FOD) which specify the pollutant location (SSFO) of a detected structure pollutant (BSS), in particular a building pollutant, within or on the building,
wherein the location data (FOD) of the pollutant location (SSFO) include
- a structure identifier (BID) of the affected building (B),
- an identifier (PID) of the detecting person P, in particular the appraiser, who is detecting the location-based pollutant data (SSD),
- a floor number of a floor within the structure (B),
- a room number of a structure room (BR) within the structure (B), and/or
- position coordinates (PK) of the pollutant location (SSFO).

4. System according to any of preceding claims 1 to 3,
wherein the field device (FG) is configured to detect the location-based pollutant data (SSD) together with
- material data relating to biological, chemical and/or physical properties of the detected structure pollutant (BSS),
- measurement data, detected by sensors (S), relating to the detected structure pollutant (BSS),
- camera image data (KBD) of the structure pollutant (BSS) detected at the pollutant location (SSFO),
- a machine-readable description of the discovered structure damage and/or structure pollutant (BSS),
- position coordinates (PK), detected using a positioning unit (PE), of the pollutant location (SSFO),
- a height or floor number, determined using a height sensor, of the pollutant location (SSFO),
- an audio recording, inputted using a microphone (M), to describe the discovered structure damage and/or structure pollutant (BSS), and
- time data which specify a detection time of the location-based pollutant data (SSD).

5. System according to any of preceding claims 1 to 4,
wherein the portable field device (FG) includes a material sampling unit (MEE), integrated or connectable thereto, for taking a material sample of a potential structure pollutant (BSS) at the pollutant location (SSFO).

6. System according to any of preceding claims 1 to 5,
wherein the portable field device (FG) is configured to transmit the material properties, determined by the data processing unit (DVE) of the field device (FG), of a structure pollutant (BSS) present at the pollutant location (SSFO), which is potentially hazardous to health and/or to the environment, to the evaluation unit (AE) implemented on the computer (R), and wherein the evaluation unit (AE) is configured to evaluate the material property data received by the field device (FG) on the basis of pollutant data (SSD), stored in the database (DB) of the system, of a plurality of known structure pollutants (BSS), so as to detect a type of the structure pollutant (BSS) present at the pollutant location (SSFO) and an extent of the hazard from the structure pollutant (BSS).

7. System according to any of preceding claims 1 to 6,
wherein the field device (FG) is configured to transmit the location-based pollutant data (SSD) detected locally by the portable field device (FG), via the data interface (DSS) of the field device (FG) and a data network (DNW), to the central database (DB) of the system, to which the computer (R), in particular server, of the system having the evaluation unit (AE) implemented therein has access, wherein the central database (DB) of the system is configured to store structure plans (BPL) of a plurality of structures (B) of different structure operators and a plurality of pollutant data (SSD) of structure pollutants (BSS) .

8. System according to any of preceding claims 1 to 6,
wherein terminals (EG) of different structure operators are connected to a management server of the system via a data network (DNW) to upload and/or adjust structure plans (BPL) and/or structure data, in particular construction material data of construction elements of the structure (B), which are stored in the central database (DB) of the system, wherein the location-based pollutant data (SSD) of structure pollutants (BSS) which are detected within a structure (B) of a structure operator can be displayed in a filtered manner on terminals (EG) of the relevant structure operator.

9. System according to any of preceding claims 1 to 8,
wherein the mobile portable field device (FG) is an input tablet or an augmented-reality input device.

10. System according to any of preceding claims 1 to 9,
wherein the evaluation unit (AE), implemented on the computer (R), of the system is configured to control, using the location-based pollutant data (SSD), a removal of the structure pollutants (BSS) from the affected structure (B) to a treatment site, disposal site or recycling site and/or a physical, chemical and/or biological treatment of the structure pollutants (BSS) at the treatment site, disposal site or recycling site as a function of generated instructions and/or control signals.

11. System according to claim 10,
wherein the evaluation unit (AE), implemented on the computer (R), of the system is configured to control in logistic terms the removal of the structure pollutants (BSS) from the affected structure (B) to a suitable treatment site, disposal site or recycling site in the vicinity of the affected structure (B), on the basis of the stored structure plan (BPL) of the affected structure (B), a stored plan of the surroundings of the structure (B), and locally available transport resources, in particular transport vehicles (TF)

12. System according to any of preceding claims 1 to 11, wherein the evaluation unit (AE) implemented on the computer (R) includes an artificial neural network (ANN) which is capable of machine learning and which can be trained, using location-based pollutant data (SSD), to detect damage patterns.

13. System according to any of preceding claims 1 to 12,
wherein the field device (FG) includes a calculation unit (BE) configured to calculate, for the detected location-based pollutant data (SSD) and/or accompanying sample data, a certificate (Z) certifying the detection of the location-based pollutant data (SSD) and/or the taking of a material sample at the pollutant location (SSDO) within the structure (B) by the portable field device (FG),
wherein the field device (FG) is configured to transmit the calculated certificate (Z), together with the pollutant data (SSD) and/or accompanying sample data, to the evaluation unit (AE) implemented on the computer (R) and/or to the database (DB) of the system and/or to an analysis laboratory (AL).

14. Method for providing instructions for treatment of structure pollutants (BSS), comprising the steps of:
(a) detecting (S1) location-based pollutant data (SSD) of structure pollutants (BSS) at pollutant locations (SSFO) of affected structures (B), the location-based pollutant data (SSD) of structure pollutants (BSS) being detected on site at pollutant locations (SSFO) using a mobile portable field device (FG), the portable field device (FG) including a data processing unit (DVE) for on-site measurement and/or on-site analysis of biological, chemical and/or physical properties of a structure pollutant (BSS) present in or on the structure (B), which properties can be transmitted as material property data;
(b) transmitting (S2) the detected location-based pollutant data (SSD) to an evaluation unit (AE) implemented on a computer (R) and/or to a database (DB); and
(c) evaluating (S3) the transmitted location-based pollutant data (SSD) using the evaluation unit (AE) implemented on the computer (R), on the basis of structure plans (BPL) of the affected structure (B) stored in the central database (DB), for automatic generation of instructions and/or control signals for treatment of structure pollutants (BSS) of the affected structure (B) which are hazardous to health and/or to the environment and/or for management of pollutant data (SSD).

15. Method according to claim 14, comprising the following further steps:
sending a material sample of the structure pollutant (BSS), taken locally at the pollutant location (SSFO) by a material sampling unit (MEE) of the field device (FG), together with accompanying sample data, to an analysis unit (ANE) of a selected analysis laboratory (AL),
performance of a material analysis of the received material by the analysis laboratory, and
transmitting the biological, chemical and physical properties thus determined of the material sample, as location-based pollutant data (SSD), together with the accompanying sample data, to the evaluation unit (AE),
implemented on the computer (R), of the system and/or to the central database (DB) of the system,
wherein accompanying sample data include a sample identifier, a sampling site or a location of the material sample, a sampling date of the material sample, and/or a specification as to the sample type of the material sample.

16. Method according to either claim 14 or claim 15,
wherein the structure pollutants (BSS) include solid, liquid or gaseous substances which are hazardous to the environment and/or to health and which are present in or on construction elements of the structure (B).

## Revendications

1. Système de traitement de polluants de construction (BSS), comprenant une unité d'évaluation (AE), qui est implémentée sur un ordinateur (R), en particulier un serveur, une base de données centrale (DB), à laquelle l'unité d'évaluation (AE) a accès, et un appareil de terrain portable mobile (FG) qui présente une interface de données (DSS) vers l'unité d'évaluation (AE) et vers la base de données (DB), le système étant conçu pour saisir localement des données de polluants (SSD) liées au site de découverte de polluants de construction (BSS) sur des sites de découverte de polluants (SSFO) d'au moins une construction concernée (B), en particulier d'un bâtiment, et l'unité d'évaluation (AE) étant conçue pour évaluer les données de polluants (SSD) liées au site de découverte saisies, sur la base d'un plan de construction (BPL) de la construction concernée (B), stocké dans la base de données centrale (DB), et pour générer des instructions et/ou des signaux de commande pour le traitement de polluants de construction (BSS) et/ou pour la gestion de données de polluants (SSD), l'appareil de terrain (FG) étant conçu pour saisir sur place les données de polluants (SSD) liées au site de découverte de polluants de construction (BSS) sur des sites de découverte de polluants (SSFO) et pour transmettre les données de polluants (SSD) liées au site de découverte à l'unité d'évaluation (AE) et/ou à la base de données centrale (DB) via l'interface de données (DSS), l'appareil de terrain portable (FG) présentant une unité de traitement de données (DVE) qui est conçue pour la mesure sur place et/ou l'analyse sur place de propriétés biologiques, chimiques et/ou physiques d'un polluant de construction (BSS) présent dans ou sur la construction (B), qui peuvent être transmises en tant que données de propriétés de matériau via l'interface de données (DSS) de l'appareil de terrain (FG) à l'unité d'évaluation (AE) du système implémentée sur l'ordinateur (R) et/ou à la base de données centrale (DB) du système.

2. Système selon la revendication 1,
dans lequel l'unité d'évaluation (AE) du système implémentée sur l'ordinateur (R) est conçue pour générer des instructions et/ou des signaux de commande pour la manipulation, le traitement, l'élimination et/ou le recyclage de polluants de construction (BSS) dangereux pour la santé et/ou pour l'environnement en fonction des données de polluants (SSD) liées au site de découverte saisies et du plan de construction (BPL) stocké de la construction concernée (B), et pour les délivrer via une interface de commande (INT) et/ou une interface de données IFC (IFC).

3. Système selon l'une des revendications 1 à 2 précédentes, dans lequel l'appareil de terrain (FG) est configuré pour saisir les données de polluants (SSD) liées au site de découverte avec des données de localisation (FOD) qui indiquent le site de découverte de polluant (SSFO) d'un polluant de construction (BSS) détecté, en particulier d'un polluant de bâtiment, à l'intérieur du bâtiment ou sur le bâtiment,
dans lequel les données de localisation (FOD) du site de découverte de polluant (SSFO) comprennent :
- un identificateur de construction (BID) de la construction concernée (B),
- un identificateur (PID) de la personne P chargée de la saisie, en particulier de l'expert qui saisit les données de polluants (SSD) liées au site de découverte,
- un numéro d'étage d'un étage à l'intérieur de la construction (B),
- un numéro de local d'un local de construction (BR) à l'intérieur de la construction (B) et/ou
- des coordonnées de position (PK) du site de découverte de polluant (SSFO).

4. Système selon l'une des revendications 1 à 3 précédentes, dans lequel l'appareil de terrain (FG) est conçu pour saisir les données de polluants (SSD) liées au site de découverte avec
- des données de matériau relatives aux propriétés biologiques, chimiques et/ou physiques du polluant de construction (BSS) détecté,
- des données de mesure saisies au moyen de capteurs (S) relatives au polluant de construction (BSS) détecté,
- des données d'image de caméra (KBD) du polluant de construction (BSS) détecté sur le site de découverte de polluant (SSFO),
- une description lisible par machine du dommage de construction et/ou du polluant de construction (BSS) survenu,
- des coordonnées de position (PK) du site de découverte de polluant (SSFO) saisies au moyen d'une unité de positionnement (PE),
- une altitude ou un numéro d'étage du site de découverte de polluant (SSFO) déterminé(e) au moyen d'un capteur d'altitude,
- un enregistrement audio entré au moyen d'un microphone (M) pour décrire le dommage de construction et/ou le polluant de construction (BSS) survenu et
- des données temporelles indiquant un instant de saisie des données de polluants (SSD) liées au site de découverte.

5. Système selon l'une des revendications 1 à 4 précédentes, dans lequel l'appareil de terrain portable (FG) présente une unité de prélèvement de matériau (MEE) intégrée ou pouvant y être raccordée pour prélever un échantillon de matériau d'un potentiel polluant de construction (BSS) sur le site de découverte de polluant (SSFO).

6. Système selon l'une des revendications 1 à 5 précédentes, dans lequel l'appareil de terrain portable (FG) est conçu pour transmettre à l'unité d'évaluation (AE) implémentée sur l'ordinateur (R) les données de propriétés de matériau déterminées par l'unité de traitement de données (DVE) de l'appareil de terrain (FG) d'un polluant de construction (BSS) potentiellement dangereux pour la santé et/ou pour l'environnement présent sur le site de découverte de polluant (SSFO), et dans lequel l'unité d'évaluation (AE) est conçue pour évaluer les données de propriétés de matériau reçues de l'appareil de terrain (FG) sur la base de données de polluants (SSD) d'une pluralité de polluants de construction (BSS) connus, stockées dans la base de données (DB) du système, afin de reconnaître un type du polluant de construction (BSS) présent sur le site de découverte de polluant (SSFO) ainsi qu'une ampleur du danger émanant du polluant de construction (BSS).

7. Système selon l'une des revendications 1 à 6 précédentes, dans lequel l'appareil de terrain (FG) est conçu pour transmettre les données de polluants (SSD) liées au site de découverte, saisies localement par l'appareil de terrain portable (FG), via l'interface de données (DSS) de l'appareil de terrain (FG) et un réseau de données (DNW) à la base de données centrale (DB) du système, à laquelle l'ordinateur (R), en particulier le serveur, du système avec l'unité d'évaluation (AE) qui y est implémentée, a accès,
dans lequel la base de données centrale (DB) du système est conçue pour stocker des plans de construction (BPL) d'une pluralité de constructions (B) de différents exploitants de constructions et une pluralité de données de polluants (SSD) de polluants de construction (BSS).

8. Système selon la revendication 7,
dans lequel des terminaux (EG) de différents exploitants de constructions sont reliés par un réseau de données (DNW) à un serveur de gestion du système pour télécharger et/ou adapter des plans de construction (BPL) et/ou des données de construction, en particulier de données de matériau de construction d'éléments de construction de la construction (B), qui sont stockés dans la base de données centrale (DB) du système,
dans lequel les données de polluants (SSD) liées au site de découverte de polluants de construction (BSS), qui sont détectées à l'intérieur d'une construction (B) d'un exploitant de construction, peuvent être affichées de manière filtrée sur des terminaux (EG) de l'exploitant de construction concerné.

9. Système selon l'une des revendications 1 à 8 précédentes, dans lequel l'appareil de terrain portable mobile (FG) est une tablette de saisie ou un appareil de saisie à réalité augmentée.

10. Système selon l'une des revendications 1 à 9 précédentes, dans lequel l'unité d'évaluation (AE) du système implémentée sur l'ordinateur (R) est conçue pour commander, à l'aide des données de polluants (SSD) liées au site de découverte, une évacuation des polluants de construction (BSS) de la construction concernée (B) vers un site de traitement, un site d'élimination ou un site de recyclage et/ou un traitement physique, chimique et/ou biologique des polluants de construction (BSS) sur le site de traitement, le site d'élimination ou le site de recyclage en fonction d'instructions et/ou de signaux de commande générés.

11. Système selon la revendication 10,
dans lequel l'unité d'évaluation (AE) du système implémentée sur l'ordinateur (R) est conçue pour commander logistiquement l'évacuation des polluants de construction (BSS) de la construction concernée (B) sur la base du plan de construction (BPL) stocké de la construction concernée (B), d'un plan d'environnement stocké de la construction (B) et de ressources de transport disponibles localement, en particulier de véhicules de transport (TF), vers un site de traitement, un site d'élimination ou un site de recyclage approprié à proximité de la construction concernée (B).

12. Système selon l'une des revendications 1 à 11 précédentes, dans lequel l'unité d'évaluation (AE) implémentée sur l'ordinateur (R) présente un réseau neuronal artificiel (ANN) pouvant être appris par une machine, qui peut être entraîné avec des données de polluants (SSD) liées au site de découverte à la reconnaissance de motifs de dommages.

13. Système selon l'une des revendications 1 à 12 précédentes, dans lequel l'appareil de terrain (FG) présente une unité de calcul (BE) qui est conçue pour calculer, pour les données de polluants (SSD) liées au site de découverte saisies et/ou les données d'accompagnement d'échantillon, un certificat (Z) qui certifie la saisie des données de polluants (SSD) liées au site de découverte et/ou le prélèvement d'un échantillon de matériau sur le site de découverte de polluant (SSFO) à l'intérieur de la construction (B) par l'appareil de terrain portable (FG), dans lequel l'appareil de terrain (FG) est conçu pour transmettre le certificat (Z) calculé avec les données de polluants (SSD) et/ou les données d'accompagnement d'échantillon à l'unité d'évaluation (AE) implémentée sur l'ordinateur (R) et/ou à la base de données (DB) du système et/ou à un laboratoire d'analyse (AL).

14. Procédé pour fournir des instructions pour le traitement de polluants de construction (BSS), comprenant les étapes consistant à :
(a) saisir (S1) des données de polluants (SSD) liées au site de découverte de polluants de construction (BSS) sur des sites de découverte de polluant (SSFO) de constructions concernées (B), les données de polluants (SSD) liées au site de découverte de polluants de construction (BSS) sur des sites de découverte de polluant (SSFO) étant saisies sur place au moyen d'un appareil de terrain portable mobile (FG), l'appareil de terrain portable (FG) présentant une unité de traitement de données (DVE) pour la mesure sur place et/ou l'analyse sur place de propriétés biologiques, chimiques et/ou physiques d'un polluant de construction (BSS) présent dans ou sur la construction (B), qui peuvent être transmises en tant que données de propriétés de matériau ;
(b) transmettre (S2) les données de polluant (SSD) liées au site de découverte saisies à une unité d'évaluation (AE) implémentée sur un ordinateur (R) et/ou à une base de données (DB) ; et
(c) évaluer (S3) les données de polluants (SSD) liées au site de découverte transmises à l'aide de l'unité d'évaluation (AE) implémentée sur l'ordinateur (R) sur la base de plans de construction (BPL) de la construction concernée (B) stockés dans la base de données (DB), pour générer automatiquement des instructions et/ou des signaux de commande pour le traitement de polluants de construction (BSS) de la construction concernée (B) reconnus comme dangereux pour la santé et/ou pour l'environnement et/ou pour la gestion de données de polluants (SSD).

15. Procédé selon la revendication 14, qui comprend les étapes supplémentaires suivantes consistant à :
envoyer un échantillon de matériau du polluant de construction (BSS) prélevé localement sur le site de découverte de polluant (SSFO) par une unité de prélèvement de matériau (MEE) de l'appareil de terrain (FG), conjointement avec des données d'accompagnement d'échantillon, à une unité d'analyse (ANE) d'un laboratoire d'analyse sélectionné (AL),
effectuer une analyse de matériau de l'échantillon de matériau reçu par le laboratoire d'analyse, et
transmettre les propriétés biologiques, chimiques et physiques de l'échantillon de matériau ainsi déterminées en tant que données de polluants (SSD) liées au site, conjointement avec les données d'accompagnement d'échantillon, à l'unité d'évaluation (AE) du système implémentée sur l'ordinateur (R) et/ou à la base de données centrale (DB) du système,
dans lequel les données d'accompagnement d'échantillon comprennent un identificateur d'échantillon, un site de prélèvement ou de découverte de l'échantillon de matériau, une date de prélèvement de l'échantillon de matériau et/ou une indication sur le type d'échantillon de l'échantillon de matériau.

16. Procédé selon l'une des revendications 14 ou 15,
dans lequel les polluants de construction (BSS) comprennent des substances solides, liquides ou gazeuses dangereuses pour l'environnement et/ou pour la santé qui sont présentes dans ou sur des éléments de construction de la construction (B) .
